# EUROPÄISCHE PATENTSCHRIFT

(11) **EP 1 910 009 B1**
(45) Veröffentlichungstag und Bekanntmachung des Hinweises auf die Patenterteilung: **06.01.2010**
(21) Anmeldenummer: 06741003.5
(22) Anmeldetag: 17.05.2006
(51) Int. Cl.: B23K 9/127

(54) **SCHWEISSVERFAHREN UND SCHWEISSSYSTEM MIT BESTIMMUNG DER POSITION DES SCHWEISSBRENNERS**
WELDING METHOD AND WELDING SYSTEM WITH DETERMINATION OF THE POSITION OF THE WELDING TORCH
PROCEDE DE SOUDURE ET SYSTEME DE SOUDURE AVEC DETERMINATION DE LA POSITION DU CHALUMEAU A SOUDER

(30) Priorität: 15.07.2005 AT 11972005
(43) Veröffentlichungstag der Anmeldung: 16.04.2008
(73) Patentinhaber: Fronius International GmbH, 4643 Pettenbach (AT)
(72) Erfinder: STÖGER, Markus, A-4655 Vorchdorf (AT); WITTMANN, Manfred, A-4845 Rutzenmoos (AT); LEKO, Tomas, A-4600 Wels (AT)
(74) Vertreter: Sonn & Partner Patentanwälte
(86) Internationale Anmeldenummer: PCT/AT2006/000204
(87) Internationale Veröffentlichungsnummer: WO 2007/009131

(56) Entgegenhaltungen:
- US-A1- 2005 055 127
- PATENT ABSTRACTS OF JAPAN Bd. 008, Nr. 128 (M-302), 14. Juni 1984 (1984-06-14) -& JP 59 030478 A (HITACHI ZOSEN KK), 18. Februar 1984 (1984-02-18)

## Beschreibung

Die Erfindung betrifft ein Schweißverfahren unter Verwendung eines Schweißbrenners, dessen Position bestimmt wird, nach dem Oberbegriff des Anspruchs 1.

Ebenso betrifft die Erfindung ein Schweißsystem mit einem Schweißgerät und einem über ein Schlauchpaket anschließbaren Schweißbrenner, wobei eine Vorrichtung zur Bestimmung der Position des Schweißbrenners vorgesehen ist, nach dem Oberbegriff des Anspruchs 21, oder des Anspruchs 31.

Bekannte Positionserfassungssysteme für Schweißbrenner beruhen auf optischen oder magnetischen Systemen, wobei eine Fuge bzw. eine Schweißnaht erkannt oder der Verlauf der Schweißung entlang der Fuge überwacht werden kann. Hierbei sind die Sende- und Empfangseinheiten des Positionserfassungssystems extern am Schweißbrenner, beispielsweise an der Gasdüse, angebracht oder bilden ein eigenständiges Gerät bzw. Komponente aus. Somit kann beispielsweise eine Kehlnaht oder eine Stumpfnaht erkannt werden, wobei während des Schweißprozesses das Positionserfassungssystem zum Erreichen einer Schweißnaht entlang der Fuge herangezogen wird. Derartige Positionserfassungssysteme sind beispielsweise aus den Patentschriften JP 63 286276 AA und JP 58 038672 AA bekannt.

Die US 2005/055127 A1 betrifft eine Maschine zur Durchführung von Bearbeitungsvorgängen an einem Werkstück und einem Verfahren zur Steuerung derselben, wobei ein Positionsbestimmungssystem unter Verwendung eines Lasers verwendet wird, um Fehler bei der Position des Bearbeitungskopfs aufgrund von unkontrollierten Bewegungen der Maschine oder des Werkstücks zu korrigieren. Zu diesem Zweck vergleicht ein Laserpositionsbestimmungssystem die tatsächliche räumliche Beziehung zwischen Werkstück und Werkzeug und vergleicht diese mit vorbestimmten gespeicherten Werten.

Nachteilig ist hierbei, dass bei derartigen Systemen die Bestimmung einer Raumposition, also der Position des Handschweißbrenners im dreidimensionalen Raum, nicht möglich ist, sondern lediglich die Nachverfolgung einer Fuge durchgeführt werden kann.

Die Aufgabe der Erfindung liegt darin, ein Schweißverfahren und -System für einen Schweißbrenner, insbesondere einen Handschweißbrenner zu schaffen, mit dem eine Erfassung der Position des Schweißbrenners im dreidimensionalen Raum ermöglicht wird.

Die Aufgabe der Erfindung wird in verfahrensmäßiger Hinsicht dadurch gelöst, dass zusätzlich zu den Werten der 3D-Positionen die dazugehörigen Schweißparameter für den mit dem Schweißbrenner ausgeführten Schweißprozess gespeichert und für nachfolgende gleichartige Schweißprozesse als Referenzwerte herangezogen werden. Vorteilhaft ist hierbei, dass die bei der Positionserfassung ermittelten Werte der 3D-Positionen des Schweißbrenners und die sich daraus ergebende Schweißnaht für folgende, gleichartige Anwendungen bzw. Werkstücke herangezogen werden können. Dadurch wird in einfacher Weise eine Qualitätsüberwachung, eine Nachvollziehbarkeit der Schweißnaht, sowie eine Schweißparameterzuordnung bei einem Schweißbrennersystem, insbesondere Handschweißbrennersystem, ermöglicht. Durch die Maßnahme, dass zusätzlich zu den Werten der 3D-Positionen die dazugehörigen Schweißparameter für den mit dem Schweißbrenner ausgeführten Schweißprozess gespeichert werden, wird erreicht, dass beim Verschweißen gleichartiger Werkstücke, an dem unterschiedliche Schweißnähte mit bevorzugt unterschiedlichen Schweißparametern durchgeführt werden müssen, die Schweißparameter automatisch beim Schweißen je nach Position eingestellt bzw. verändert werden, wodurch eine Serienproduktion beschleunigt wird und Fehleinstellungen vom Schweißer ausgeschlossen werden können.

Vorteilhafterweise werden die empfangenen Messdaten und bzw. oder die ermittelten Werte der 3D-Position des Schweißbrenners gespeichert.

Die Werte für die 3D-Position des Schweißbrenners werden vorzugsweise zu beliebigen festlegbaren Zeitpunkten, insbesondere zu Beginn und am Ende eines mit dem Schweißbrenner ausgeführten Schweißprozesses, ermittelt.

Von Vorteil ist, wenn zusätzlich zu den Werten der 3D-Positionen die dazugehörigen Zeiten eines mit dem Schweißbrenner ausgeführten Schweißprozesses gespeichert werden. Dadurch wird eine Qualitätsüberwachung erzielt und beispielsweise die Schweißgeschwindigkeit bestimmt und der Zeitpunkt der Schweißung dokumentiert.

In vorteilhafter Weise wird durch die Maßnahme, dass die zu den Werten der 3D-Positionen dazugehörigen Zeiten, für nachfolgende, gleichartige Schweißprozesse als Referenzwerte herangezogen werden, erreicht, dass unabhängig vom Schweißer ein annähernd gleiches Schweißergebnis für gleichartige Schweißnähte verschiedener, gleichartiger Werkstücke erreicht wird.

Von Vorteil ist auch, wenn die ermittelten Werte für die 3D-Positionen und Zeiten mit hinterlegten Referenzwerten verglichen und gegebenenfalls die Schweißparameter korrigiert und die vorgenommenen Änderungen gespeichert werden. Auch dadurch wird eine gleichbleibende Qualität der Schweißnaht gewährleistet.

Durch die Maßnahme, dass für die Schweißqualität relevante Daten, insbesondere Schweißgeschwindigkeit, Reihenfolge der Schweißnähte und Anstellwinkel des Schweißbrenners während des Schweißprozesses erfasst und bevorzugt in der Steuervorrichtung gespeichert werden, wird eine automatische Dokumentation und Qualitätskontrolle erzielt. Somit ist auch eine Rückverfolgung zu einem späteren Zeitpunkt einfach möglich.

Gemäß einem weiteren Merkmal der Erfindung werden die gespeicherten Werte für die 3D-Positionen des Schweißbrenners zumindest eines durchgeführten Schweißprozesses, allenfalls Referenzwerte und gespeicherte Änderungen zur Analyse, bevorzugt für Lernzwecke, vom Schweißgerät, insbesondere über ein externes Gerät, ausgelesen. Dadurch wird eine schnellere und effizientere Einschulung neuen Personals ermöglicht.

Von Vorteil ist auch, wenn die Schweißparameter eines Schweißprozesses anhand der ermittelten Werte für die 3D-Position automatisch eingestellt werden. Somit können mehrere Schweißnähte mit unterschiedlichen Schweißverfahren, insbesondere Standard-und Pulsschweißverfahren, innerhalb eines Schweißprozesses durchgeführt werden, wobei die notwendigen Einstellungen bzw.

Umschaltungen am Schweißgerät anhand einer bestimmten Position des Schweißbrenners während des Schweißprozesses automatisch erfolgen.

Die ermittelten Werte für die 3D-Position des Schweißbrenners werden vorzugsweise mit Referenzwerten verglichen, und die Bediener des Schweißbrenners akustisch oder optisch angezeigt. Somit können dem Bediener des Schweißgerätes mit Hilfe von Warnsignalen oder grafischen Darstellungen die korrekte Haltung des Schweißbrenners für den entsprechenden Schweißprozess bzw. während eines bestimmten Schweißprozesses vorgegeben und angezeigt werden. Durch dieses Feedback kann der Schweißer sofort auf Schweißfehler, beispielsweise eine Verschlechterung der Nahtoptik, reagieren und diese vermeiden bzw. reduzieren.

Aus den ermittelten Werten für die 3D-Position in Abhängigkeit der Zeit kann die Schweißgeschwindigkeit festgestellt und mit vorgegebenen Werten für die Schweißgeschwindigkeit verglichen werden und dem Bediener des Schweißbrenners akustisch oder optisch angezeigt werden. Dadurch wird erreicht, dass der Schweißer durch das Feedback sofort auf Schweißfehler, beispielsweise einen zu geringen Einbrand durch eine überhöhte Schweißgeschwindigkeit, reagieren kann. Weiters wird in vorteilhafter Weise erreicht, dass ohne externe Hilfsmittel in einfacher Form die Schweißgeschwindigkeit festgestellt werden kann und somit die Bewegungsfreiheit des Schweißbrenners nicht eingeschränkt wird.

Wenn das Starten eines Schweißprozesses nur an vorgegebenen 3D-Positionen ermöglicht wird, können Schweißnähte an falschen Stellen vermieden werden. Weiters kann damit erreicht werden, dass eine vordefinierte Reihenfolge für die Schweißnähte festgelegt werden kann, die vom Schweißer anschließend für jedes Werkstück durchgeführt werden muss. Somit wird auch sichergestellt, dass jedes Werkstück mit der entsprechenden Anzahl von Schweißnähten an der jeweiligen Position gefertigt wird.

Durch die Maßnahme, dass der Referenzwert für eine 3D-Position des Schweißbrenners der Startposition einer Schweißnaht an die bevorzugte Schweißrichtung des Bedieners des Schweißgerätes angepasst wird, wird erreicht, dass der Schweißer den Schweißbrenner mit der bevorzugten Hand (links oder rechts) führen kann.

Die 3D-Position des Schweißbrenners wird vorzugsweise bei deaktiviertem Schweißgerät, insbesondere bei nicht gestartetem Schweißprozess, durchgeführt. Dadurch kann eine bessere Referenzwertaufnahme durchgeführt werden, da keinerlei Störeinflüsse vom Schweißprozess entstehen können. Gleichzeitig hat der Schweißer eine bessere Sicht auf das Werkstück, da er keine Schutzvorrichtung für die Augen, wie bei einem gestarteten Schweißprozess notwendig, benötigt, so dass eine besser Positionierung des Schweißbrenners ermöglicht wird. Auch kann der Schweißer vor dem eigentlichen Schweißprozess eine Simulation durchführen und sich somit auf die Haltung bzw. Position des Schweißbrenners einstellen.

Von Vorteil ist auch, dass zusätzlich oder anstelle eines Sensors im Schweißbrenner zumindest ein weiterer Sensor in einer Arbeitskleidung, insbesondere in einem Armband oder in einem Handschuh, integriert wird und die Messdaten bevorzugt an die Auswerteeinheit übermittelt werden, wodurch eine flexible Anordnung des Sensors ermöglicht wird. Ein weiterer Vorteil liegt darin, dass die Sensoren im Schweißbrenner entfallen können, jedoch durch die Anordnung der weiteren Sensoren im Schweißhandschuh wiederum eine ungefähre Position des Schweißbrenners ermittelt werden kann und somit ein einfacher kostengünstiger Aufbau des Schweißbrenners erzielt wird.

Wenn die Referenzwerte, beispielsweise für die Startposition der Schweißnaht und die Schweißparameter, in einem Speicher im Schweißbrenner gespeichert werden, kann der Schweißbrenner unabhängig von der Stromquelle verwendet werden, wodurch jeder Schweißer seinen bevorzugten Schweißbrenner verwenden kann.

Zu den Referenzwerten kann eine Kennung zur Kennzeichnung der Referenzwerte für gleichartige Werkstücke, insbesondere eine Nummer, gespeichert werden. Die 3D-Positionen des Schweißbrenners für die Schweißnähte eines gleichartigen Werkstücks werden mit den entsprechenden Schweißparametern bevorzugt im Schweißgerät gespeichert, wodurch gleiche 3D-Positionen verschiedener Werkstücke als Referenzwerte im Speicher vermieden werden. Somit kann jede als Referenzwert für gleichartige Werkstücke gespeicherte 3D-Position eindeutig zugeordnet werden.

Wenn die Zeit während des mit dem Schweißbrenner ausgeführten Schweißprozesses erfasst wird, kann die Schweißgeschwindigkeit bestimmt werden und dokumentiert werden, wann die Schweißung durchgeführt wurde.

Durch die Maßnahme, dass die ermittelten Werte der 3D-Positionen während eines Schweißprozesses und die dazugehörige Zeit zur Berechnung der Schweißgeschwindigkeit des Schweißprozesses an die Steuervorrichtung des Schweißgerätes übermittelt werden, kann dem Schweißer über entsprechende Einrichtungen Feedback über die Schweißgeschwindigkeit während des Schweißvorganges gegeben werden.

Gemäß einem weiteren Merkmal der Erfindung wird der Abstand zwischen dem Sender und einem Referenzpunkt im dreidimensionalen Raum abgeglichen. Durch den Abgleich des Abstandes zwischen Sender und Referenzpunkt kann somit die Position des Schweißbrenners im dreidimensionalen Raum exakt berechnet werden.

Das oben genannte Schweißverfahren kann für manuelle Anwendungen mit Handschweißbrennern aber auch für automatisierte Anwendungen bei Schweißrobotern angewandt werden.

Die Aufgabe der Erfindung wird aber auch durch ein oben genanntes Schweißsystem gelöst, wobei im Schweißbrenner der Speicher zum Speichern der ermittelten Werte für die 3D-Position des Schweißbrenners sowie der dazugehörigen Schweißparameter für einen mit dem Schweißbrenner ausgeführten Schweißprozess vorgesehen ist.

Der Sender kann durch eine Spule, eine Funkstation, eine Radarstation oder aus beweglichen Sendern, wie Satelliten, insbesondere gemäß dem GPS-System, gebildet sein. Vorteilhaft ist, wenn kein Sichtkontakt zwischen den Sensoren und dem Sender erforderlich ist, um die 3D-Position des Schweißbrenners zu bestimmen. Weiters soll eine beliebige Positionierung des Senders möglich sein. Ein weiterer Vorteil liegt darin, dass durch den Einsatz bereits bekannter Sender ein kostengünstiger Aufbau des Schweißbrenners erzielt wird.

Durch die Maßnahme, dass der Sender der Positionserfassungsvorrichtung zumindest eine Spule zur Erzeugung eines Magnetfeldes im Bereich des Schweißprozesses des Schweißbrenners aufweist, und zumindest ein Sensor zum Erfassen des von der Spule erzeugten Magnetfeldes im Schweißbrenner angeordnet oder diesem zugeordnet ist, wird erreicht, dass das von der Spule erzeugte Magnetfeld alle Hindernisse, Gegenstände oder Ähnliches im Raum durchdringt und somit eine sichere Positionsbestimmung des Schweißbrenners ermöglicht.

Wenn der Sender mehrere Schweißprozessbereiche und somit mehrere Schweißbrenner abdeckt, und somit die 3D-Position mehrerer Schweißbrenner, über die in den Schweißbrennern integrierte Sensoren ermittelbar sind, können bestehende Schweißprozessbereiche beliebig erweitert und angeordnet werden.

Vorteilhafterweise ist jedem Schweißprozessbereich ein Referenzpunkt im dreidimensionalen Raum zugeordnet.

Wenn der Sensor für die Positionserfassung durch einen magnetoresistiven Sensor gebildet ist, wird eine hohe Magnetfeldempfindlichkeit bei geringem Rauschen erreicht.

Wenn eine Einrichtung zur Filterung von Störmagnetfeldern, welche insbesondere von der Stromquelle des Schweißgerätes und einem Lichtbogen erzeugt werden, vorgesehen ist, kann eine sichere und exaktere Positionsbestimmung des Schweißbrenners erreicht werden.

Wenn eine Anzeigeeinrichtung zur akustischen und/oder optischen Anzeige der ermittelten 3D-Position oder von Abweichungen von Referenzpositionen zur Unterstützung durchzuführender Korrekturmaßnahmen vorgesehen ist, kann dem Schweißer wichtige Information übermittelt werden.

Dabei ist die Anzeigeeinrichtung vorzugsweise in einer Arbeitskleidung des Schweißers, insbesondere im Schweißhelm integriert. Bei mehreren parallel laufenden Schweißprozessen in den unterschiedlichen Schweißprozessbereichen wird dadurch sichergestellt, dass die einzelnen Schweißer über Korrekturmaßnahme des eigenen Schweißprozesses informiert werden können und somit von den parallel laufenden Korrekturmaßnahmen nicht gestört bzw. beeinflusst werden.

Durch die Maßnahme, dass zusätzlich oder anstelle der Sensoren im Schweißbrenner zumindest ein Sensor in einer Arbeitskleidung, insbesondere in einem Armband oder Handschuh, angeordnet ist, wird eine flexible Anordnung des Sensors erreicht. Ein weiterer Vorteil liegt darin, dass die Sensoren im Schweißbrenner entfallen können, jedoch durch die Anordnung der weiteren Sensoren im Schweißhandschuh wiederum eine ungefähre Position des Schweißbrenners ermittelt werden kann und somit ein einfacher kostengünstiger Aufbau des Schweißbrenners erzielt wird.

Alternativ zur oben beschriebenen Anordnung ist es auch möglich, dass zur Bestimmung der Position des Schweißbrenners zumindest ein Sender im Schweißbrenner integriert oder diesem zugeordnet ist, und im Schweißbrenner ein Speicher zum Speichern der ermittelten Werte für die 3D-Position des Schweißbrenners sowie der dazugehörigen Schweißparameter für einen mit dem Schweißbrenner ausgeführten Schweißprozess vorgesehen ist.

Die vorliegende Erfindung wird anhand der beigefügten, schematischen Zeichnungen näher erläutert.

Darin zeigen:
Fig. 1 eine exemplarische Darstellung eines Schweißgerätes;
Fig. 2 die erfindungsgemäße Positionserfassung eines Handschweißbrenners in einem Schweißprozessbereich innerhalb eines Raumes mit einem im Raum befestigten Sender;
Fig. 3 eine schematische Darstellung eines Handschweißbrenners mit einem integrierten Sensor;
Fig. 4 eine schematische Darstellung eines Handschweißbrenners mit einem integrierten Sensor und zusätzlichen Sensoren;
Fig. 5 eine schematische Darstellung eines Werkstücks aus mehreren Teilen, welche über entsprechende Schweißnähte miteinander verbunden sind;
Fig. 6 die erfindungsgemäße Positionserfassung mehrerer Schweißbrenner in mehreren Schweißprozessbereichen innerhalb eines Raumes mit einem im Raum befestigten Sender;
Fig. 7 die erfindungsgemäße Positionserfassung mehrerer Schweißbrenner in mehreren Schweißprozessbereichen innerhalb eines Raumes mit einem externen Sender;
Fig. 8 eine schematische Darstellung eines Schweißprozesses, bei dem eine zu geringe Schweißgeschwindigkeit erkannt wird; und
Fig. 9 eine schematische Darstellung eines Schweißprozesses, bei dem ein zu steiler Anstellwinkel des Schweißbrenners erkannt wird.

Einführend wird festgehalten, dass gleiche Teile des Ausführungsbeispiels mit gleichen Bezugszeichen versehen werden.

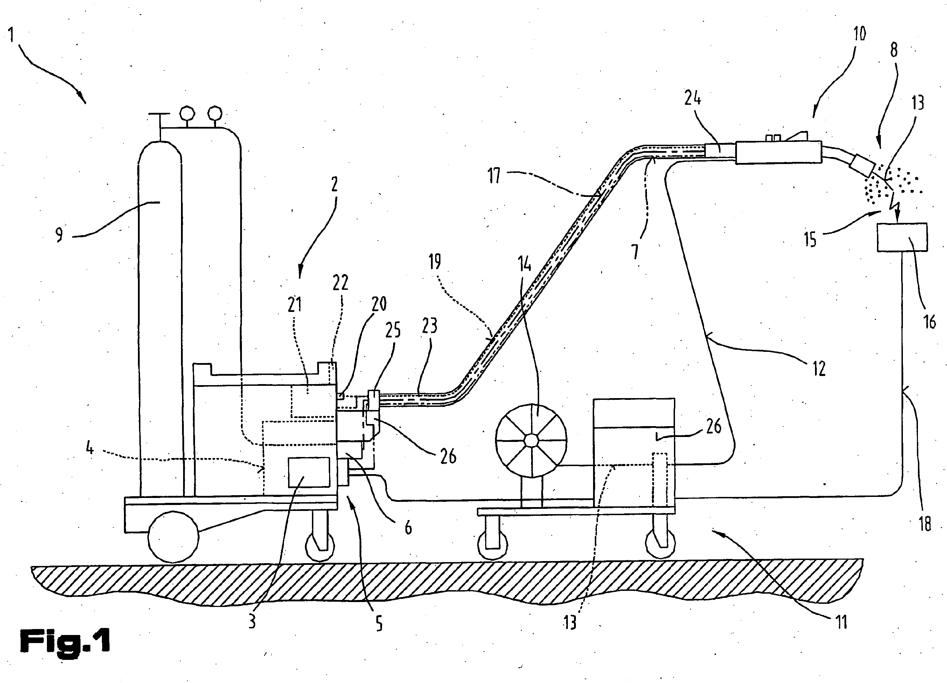

In Fig. 1 ist ein Schweißgerät 1 bzw. eine Schweißanlage für verschiedenste Prozesse bzw. Verfahren, wie z.B. MIG/MAG-Schweißen bzw. WIG/TIG-Schweißen oder Elektroden-Schweißverfahren; Doppeldraht/Tandem-Schweißverfahren, Plasma- oder Lötverfahren usw., gezeigt.

Das Schweißgerät 1 umfasst eine Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dergl., zwischen einem Gasspeicher 9 und einem Schweißbrenner 10 bzw. einem Brenner angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Zusatzwerkstoff bzw. ein Schweißdraht 13 von einer Vorratstrommel 14 bzw. einer Drahtrolle in den Bereich des Schweißbrenners 10 zugeführt wird. Selbstverständlich ist es möglich, dass das Drahtvorschubgerät 11, wie es aus dem Stand der Technik bekannt ist, im Schweißgerät 1, insbesondere im Grundgehäuse, integriert ist und nicht, wie, in Fig. 1 dargestellt, als Zusatzgerät ausgebildet ist.

Es ist auch möglich, dass das Drahtvorschubgerät 11 den Schweißdraht 13 bzw. den Zusatzwerkstoff außerhalb des Schweißbrenners 10 an die Prozessstelle zuführt, wobei hierzu im Schweißbrenner 10 bevorzugt eine nicht abschmelzende Elektrode angeordnet ist, wie dies beim WIG/TIG-Schweißen üblich ist.

Der Strom zum Aufbauen eines Lichtbogens 15, insbesondere eines Arbeitslichtbogens, zwischen der nicht abschmelzenden Elektrode, nicht dargestellt, und einem Werkstück 16 wird über eine Schweißleitung 17 vom Leistungsteil 3 der Stromquelle 2 dem Schweißbrenner 10, insbesondere der Elektrode, zugeführt, wobei das zu verschweißende Werkstück 16, welches aus mehreren Teilen gebildet ist, über eine weitere Schweißleitung 18 ebenfalls mit dem Schweißgerät 1, insbesondere mit der Stromquelle 2, verbunden ist und somit über den Lichtbogen 15 bzw. den gebildeten Plasmastrahl für einen Prozess ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 bewirkt werden kann.

Das Schweißgerät 1 weist weiters eine Ein- und/oder Ausgabevorrichtung 22 auf, über die die unterschiedlichsten Schweißparameter, Betriebsarten oder Schweißprogramme des Schweißgerätes 1 eingestellt bzw. aufgerufen werden können. Dabei werden die über die Ein- und/oder Ausgabevorrichtung 22 eingestellten Schweißparameter, Betriebsarten oder Schweißprogramme an die Steuervorrichtung 4 weitergeleitet und von dieser werden anschließend die einzelnen Komponenten der Schweißanlage bzw. des Schweißgerätes 1 angesteuert bzw. entsprechende Sollwerte für die Regelung oder Steuerung vorgegeben.

Weiters ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine Kupplungsvorrichtung 24 mit dem Schweißbrenner 10 verbunden, wogegen die einzelnen Leitungen im Schlauchpaket 23 mit den einzelnen Kontakten des Schweißgerätes 1 über Anschlussbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden. Selbstverständlich ist es möglich, dass die Kupplungsvorrichtung 24 auch für die Verbindung am Schweißgerät 1 eingesetzt werden kann.

Grundsätzlich ist zu erwähnen, dass für die unterschiedlichen Schweißverfahren bzw. Schweißgeräte 1, wie beispielsweise WIG-Geräte oder MIG/MAG-Geräte oder Plasmageräte, nicht alle zuvor benannten Komponenten verwendet bzw. eingesetzt werden müssen. Hierzu ist es beispielsweise möglich, dass der Schweißbrenner 10 als luftgekühlter Schweißbrenner 10 ausgeführt werden kann.

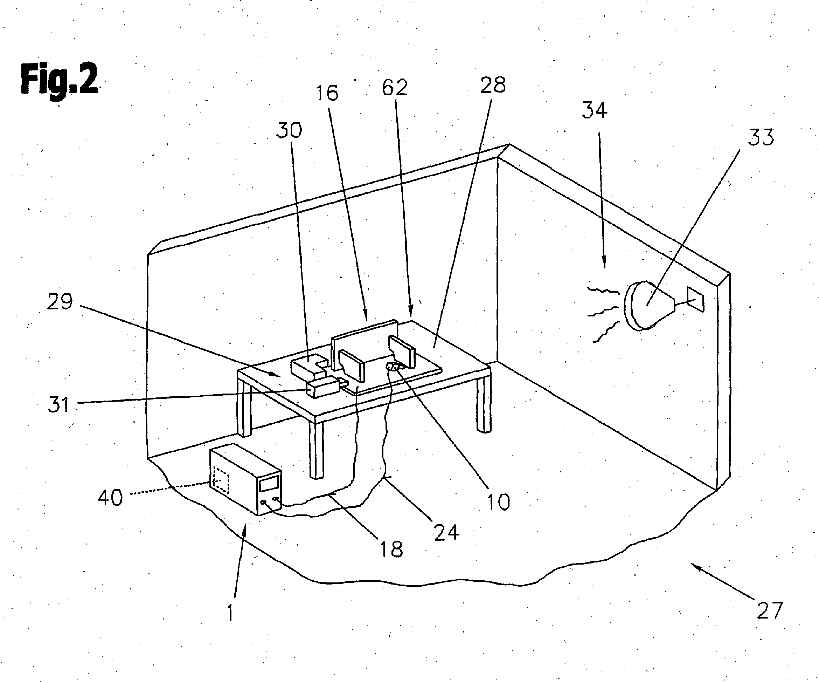

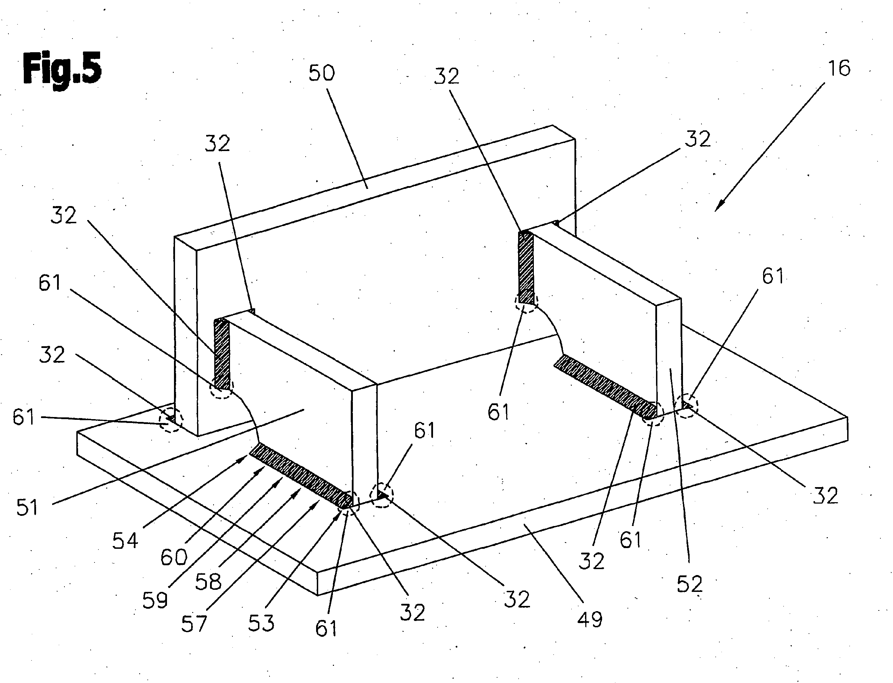

Anhand der Fig. 2 bis 5 wird die erfindungsgemäße Positionserfassung für einen Handschweißprozess, welcher in einem Schweißprozessbereich 27 innerhalb eines Raumes, beispielsweise einem Arbeitsplatz in einer Halle, durchgeführt wird, erläutert. Der dargestellte Schweißprozessbereich 27 besteht zu einem Teil aus einem Werktisch 28 mit einer Spannvorrichtung 29 für das Werkstück 16. Die Spannvorrichtung 29 besteht beispielsweise aus zumindest einem Anschlagwinkel 30 und zumindest einer Fixiervorrichtung 31, damit zur Herstellung einer Schweißverbindung immer ein definierter Ausgangspunkt gegeben ist. Da das Werkstück 16 aus mehreren einzelnen Teilen, wie besser aus Fig. 5 ersichtlich, gebildet sein kann, bietet die Spannvorrichtung 29 ebenso eine Befestigungsmöglichkeit für die einzelnen Teile des Werkstücks 16, die jedoch zur Vereinfachung nicht dargestellt ist. Zum zweiten Teil ist der Schweißprozessbereich 27 zur Durchführung eines Schweißprozesses mit dem Schweißgerät, 1 ausgestattet, welches über das Schlauchpaket 23 mit dem Schweißbrenner 10 bzw. einem Handschweißbrenner verbunden ist. Das Werkstück 16 bzw. der Werktisch 28 ist mit einer weiteren Schweißleitung 18 verbunden. Je nach eingesetztem Schweißverfahren kann ein Drahtvorschubgerät 11 vorgesehen sein oder nicht. Somit kann ein Schweißprozess gestartet werden, um das Werkstück 16 zu fertigen bzw. zu schweißen.

Zum Fertigen des aus mehreren einzelnen Teilen bestehenden Werkstücks 16, kann der Schweißprozessbereich 27 auch eine Sitzgelegenheit (nicht dargestellt) für einen Schweißer bieten. Durch das Verschweißen zweier Teile mit dem Schweißbrenner 10 ergeben sich eine bzw. mehrere Schweißnähte 32, welche die verschweißten Teile unlösbar miteinander verbinden. Hierzu stellt der Schweißer für den Schweißprozess die entsprechenden Schweißparameter, wie Schweißstrom, Schweißspannung, Drahtvorschubgeschwindigkeit, usw. ein, um eine optimale Schweißqualität zu erzielen. Während eines Schweißprozesses regelt die Steuervorrichtung 4 entsprechend die Schweißparameter damit diese annähernd konstant bleiben.

Erfindungsgemäß wird beim Starten eines Schweißprozesses ein Positionserfassungssystem aktiviert, welches die Werte der Positionen des Schweißbrenners 10 im dreidimensionalen Raum ermittelt. Hierzu ist im Schweißprozessbereich 27 ein Sender 33 angeordnet, welcher ein Signal 34 ausstrahlt, das über einen im Schweißbrenner 10 integrierten oder diesem zugeordneten Empfänger 35 bzw. Sensor 36 aufgenommen werden kann.

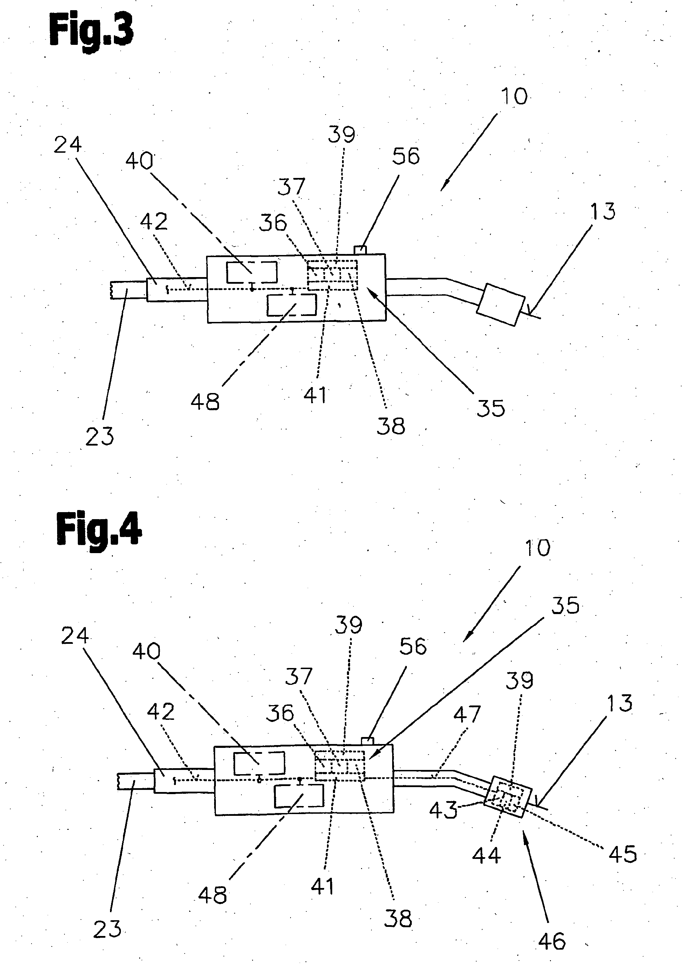

Zur Bestimmung der Position im dreidimensionalen Raum ist es erforderlich, dass aus dem vom Sender 33 gelieferten Signal 34 drei Koordinaten bestimmt werden, bevorzugt die aus dem kartesischen Koordinatensystem bekannten Werte X, Y und Z. Daher besteht der im Schweißbrenner 10 gemäß Fig. 3 integrierte Empfänger 35 aus drei Sensoren 36-38, wobei jeder Sensor 36-38 einen der drei Werte X, Y oder Z ermitteln kann.

Da das Signal 34 von anderen im Schweißprozessbereich 27 installierten Systemen oder die durch den Schweißprozess erzeugten Störungen beeinflusst werden kann und somit die von den Sensoren 36-38 ermittelten Werte verfälscht werden könnten, ist den Sensoren 36-38 eine Filtereinrichtung 39 zugeschaltet. Dadurch können die von den Sensoren 36-38 ermittelten Werte für die 3D-Position des Schweißbrenners 10 als Messdaten an eine Auswerteeinheit 40 übermittelt werden. Beispielsweise ist die Auswerteeinheit 40 im Schweißgerät 1 angeordnet oder bildet eine eigene, externe Einheit. Die Übermittlung der Messdaten der Sensoren 36-38 erfolgt beispielsweise über eine im Empfänger 35 bzw. Sensor 36 integrierte Datenkommunikationseinheit 42, welche beispielsweise über einen im Schlauchpaket 23 integrierten Datenbus 42 mit der Auswerteeinheit 40 im Schweißgerät 1 verbunden ist.

Bei einem derartigen Aufbau hat der Schweißbrenner 10 einen gewissen Bewegungsradius an der die dreidimensionale Position unverändert bleibt. Sind nämlich beispielsweise die Sensoren 36-38 im vorderen Teil, d.h. an jenem Ende, wo der Schweißdraht 13 aus dem Schweißbrenner 10 austritt, angeordnet, kann der hintere Teil des Schweißbrenners 10 frei bewegt werden, wobei die 3D-Position unverändert bleibt. Dies hat zur Folge, dass die Haltung des Schweißbrenners 10 nicht berücksichtigt wird.

Da jedoch die Haltung des Schweißbrenners 10 bei bestimmten Schweißverfahren Einfluss auf die Qualität der Schweißnaht 32 hat, werden die Sensoren 36-38 unterschiedlich im Schweißbrenner 10 verteilt.

Wie aus Fig. 4 ersichtlich können zusätzlich zu den drei im Schweißbrenner 10 integrierten Sensoren 36-38 weitere Sensoren 43-45 in der Gasdüse 46 des Schweißbrenners 10 integriert sein. Ebenso ist den Sensoren 43-45 die Filtereinheit 39 zugeschaltet, und sind die Sensoren 43-45 über einen internen Datenbus 47 mit der Datenkommunikationseinheit 41 im Schweißbrenner 10 verbunden. Somit erhält die Auswerteeinheit 40 Messdaten von zwei unterschiedlichen Positionen im Schweißbrenner 10, wodurch die Haltung des Schweißbrenners 10 bei einem Schweißvorgang berücksichtigt werden kann.

Im Allgemeinen sei zu den Fig. 3 und 4 erwähnt, dass es selbstverständlich auch möglich ist, dass die Datenkommunikationseinheit 41 beispielsweise über eine Funkverbindung die Messdaten der Sensoren 36-38 an die Auswerteeinheit 40 übermittelt. Aus den übermittelten Messdaten kann die Auswerteeinheit 40 die entsprechende 3D-Position ermitteln und speichern. Dies erfolgt bevorzugt softwaremäßig über bekannte Berechnungsmethoden.

Ein Speicher 48 und ggf auch die Auswerteeinheit 40 ist im Schweißbrenner 10 integriert. Dies wird dafür verwendet, dass die für die erfindungsgemäße Positionserfassung relevanten Daten, insbesondere die 3D-Positionen, und dazugehörige Schweißparameter, auf welche im Folgenden näher eingegangen wird, im Schweißbrenner 10 gespeichert werden.

Mit Hilfe des in den Fig. 3 oder 4 beschriebenen Schweißbrenners 10 kann die erfindungsgemäße Positionserfassung, beispielsweise an dem in Fig. 5 gezeigten Werkstück 16, durchgeführt werden.

Die Positionserfassung des Schweißbrenners 10 erfolgt beispielsweise derart, dass vom Sender 33 ein Signal 34 ausgestrahlt wird. Aus diesem Signal 34 ermittelt der Empfänger 35 über die Sensoren 36-38, 43-45 die Messdaten zur Bestimmung der 3D-Position des Schweißbrenners 10, welche an die Auswerteeinheit 40 übermittelt werden. Aus den übermittelten Messdaten kann die Auswerteeinheit 40 die 3D-Position des Schweißbrenners 10 berechnen und speichern. Dies ist insbesondere dann von Vorteil, wenn von einem Werkstück 16 größere Stückzahlen gefertigt werden, d.h. mehrere gleichartige Werkstücke 16 geschweißt werden. Hierbei wird beim Fertigen des ersten Werkstücks 16 eine gewisse Anzahl von 3D-Positionen des Schweißbrenners 10 während des Schweißprozesses erfasst und gespeichert und als Referenzwerte für die weiteren, gleichartigen Werkstücke 16 herangezogen.

Für das Verschweißen der vier Teile des Werkstücks 16, Grundteil 49, Rückteil 50, Seitenteil 51 und Seitenteil 52, sind mehrere Schweißnähte 32 erforderlich. Handelt es sich bei den zu verschweißenden Teilen 49-52 um unterschiedliche Materialien oder Materialdicken, so sind für die einzelnen Schweißnähte 32 unterschiedliche Schweißparameter erforderlich. Ebenso können für die unterschiedlichen Materialien unterschiedliche Schweißverfahren nötig sein bzw. auch bei gleichen Materialien unterschiedliche Schweißverfahren verwendet werden. Beispielsweise wird für die Verschweißung der Seitenteile 51, 52 mit dem Grundteil 49 eine Standardschweißung und für das Verschweißen von Grundteil 49 mit dem Rückteil 50 eine Pulsschweißung verwendet, woraus sich entsprechend unterschiedliche Schweißparameter für diese Schweißnähte 32 ergeben.

Die entsprechenden Schweißparameter werden zusätzlich zu den Werten der jeweiligen 3D-Position des Schweißbrenners 10 gespeichert. Somit werden den Referenzwerten für die 3D-Positionen des Schweißbrenners 10 zusätzlich die dazugehörigen Schweißparameter hinterlegt.

Für die Speicherung der 3D-Position bzw. der Referenzwerte sind unterschiedliche Vorgehensweisen möglich. Hierzu können die Referenzwerte einer Schweißnaht 32 aus zumindest zwei Werten der 3D-Position, einer Startposition 53 und einer Endposition 54 bestehen. Dabei werden bei einem Schweißvorgang nur die Startposition 53 und die Endposition 54 erfasst und mit den Referenzwerten verglichen, wodurch zur Bestimmung einer Schweißnaht 32 nur wenig Daten benötigt werden. Selbstverständlich können zwischen diesen beiden Positionen noch weitere Positionen, beispielsweise nach einem vordefinierten Zeitintervall 55, als Referenzwert erfasst und mit den entsprechenden Schweißparametern gespeichert werden.

Zur Festlegung der Referenzwerte der 3D-Positionen des Schweißbrenners 10 führt der Schweißer eine oder mehrere Probeschweiβungen der betreffenden Schweißnähte 32 durch. Hierbei wird nach jeder Probeschweißung eine Qualitätskontrolle durchgeführt. Aufgrund der Ergebnisse der Qualitätskontrolle kann der Schweißer die am Schweißgerät 1 bei der Probeschweißung eingestellten Schweißparameter entsprechend verändern. Diesen Vorgang wiederholt der Schweißer solange, bis eine optimale Qualität der Schweißnaht 32 erzielt wird.

Um nunmehr die Referenzwerte, also die Werte der 3D-Positionen des Schweißbrenners 10, abzuspeichern, kann am Beginn des Schweißvorganges der Schweißer durch Drücken eines Tasters 56 am Schweißbrenner 10 die aktuelle 3D-Position des Schweißbrenners 10 als Startposition 53 für die entsprechende Schweißnaht 32 definieren. Dabei speichert das Schweißgerät 1 die Position mit den dazugehörigen Schweißparametern ab. Selbstverständlich können auch noch weitere Daten gespeichert werden bzw. entsprechende Aufzeichnungsvorgänge gestartet werden. Hierzu ist es möglich, dass mit dem Beginn des Schweißvorganges eine Zeitnehmung gestartet wird. Während des Schweißprozesses kann beispielsweise zu definierten Zeitpunkten bzw. nach einem vorgegebenen Zeitintervall 55 ebenfalls die von der Auswerteeinheit 40 ermittelte Position des Schweißbrenners 10, die Schweißparameter und die Zeit gespeichert werden, wodurch sich mehrere 3D-Positionen 57, 58, 59 und 60 innerhalb einer Schweißnaht 32 ergeben. Ist der Schweißer am Ende der zu schweißenden Schweißnaht 32 angelangt, kann er beispielsweise durch nochmaliges Drücken des Tasters 56 die Endposition 54 der Schweißnaht 32 definieren, deren Position mit den zugehörigen Schweißparametern ebenso gespeichert und die Zeitnehmung für den Schweißvorgang beendet wird.

Nachdem die 3D-Positionen des Schweißbrenners 10 für die entsprechenden Schweißnähte 32 des Werkstücks 16 von der Auswerte einheit 40 erfasst und gespeichert wurden, werden diese Positionen als Referenzwerte für die folgenden, gleichartigen Werkstücke 16 bzw. deren Schweißnähte 32 herangezogen.

Selbstverständlich kann der Schweißer vor der Aufnahme der Referenzwerte am Schweißgerät 1 bzw. über eine externe Komponente, wie einem PC, die aufzuzeichnenden Daten festlegen und die entsprechenden Schweißparameter, Zusatzfunktionen, zeiten, usw. einstellen, welche dann automatisch gespeichert werden.

Selbstverständlich kann die Erfassung der Referenzwerte für die 3D-Position für eine Schweißnaht 32 bei deaktiviertem Schweißgerät 1 bzw. Schweißprozess erfolgen. Dadurch wird erreicht, dass die Auswerteeinheit 40 genauere Messdaten von den Sensoren 36-38 erhält, da insbesondere die durch den Lichtbogen 15 erzeugten Störungen nicht auftreten, wodurch die Position exakter ermittelt werden kann. Hierbei ist es vorteilhaft, wenn die Aufnahme aller Daten in mehreren aufeinanderfolgenden Arbeitsschritten erfolgt, d.h., dass zuerst die Aufnahme der Positionen ohne aktivierten Schweißprozess durchgeführt wird, worauf anschließend derselbe Vorgang nochmals mit aktiviertem Schweißprozess durchgeführt wird, so dass die tatsächlichen Schweißparameter und Zusatzfunktionen aufgenommen werden können. Es ist aber auch möglich, dass zu der 3D-Position der Schweißer die entsprechenden Sollwerte am Schweißgerät 1 einstellt und speichert.

Somit ist die Erfassung der Referenzwerte eines Werkstücks 16 abgeschlossen, und es können diese für weitere gleichartige Werkstücke 16 herangezogen werden.

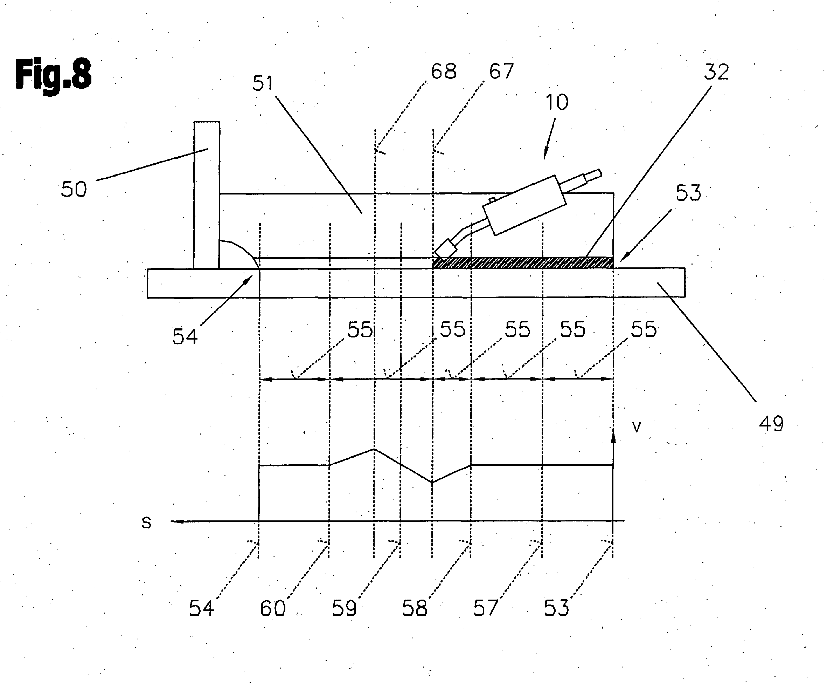

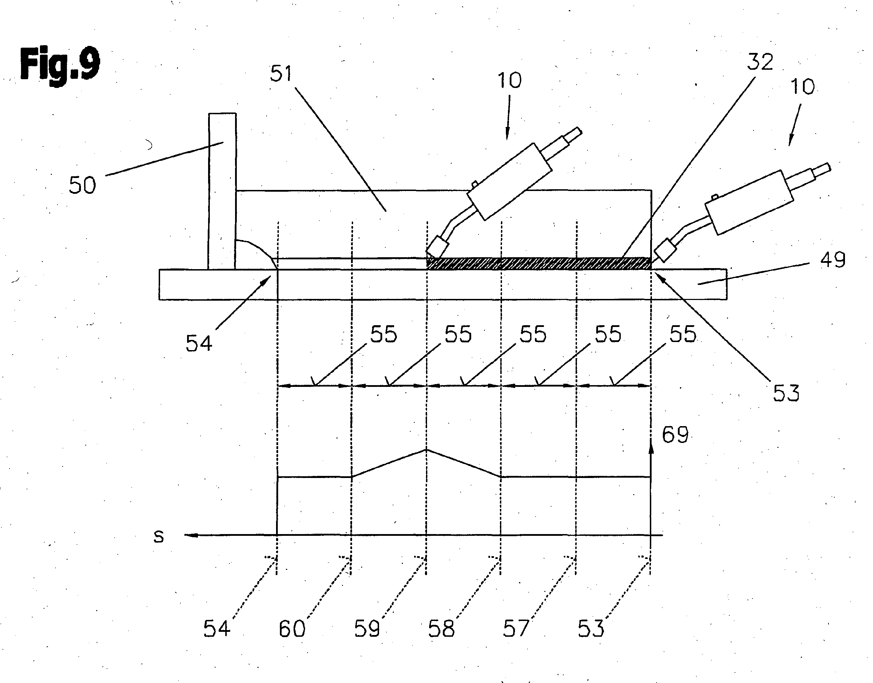

Startet der Schweißer für ein gleichartiges, neues-Werkstück 16 über den Taster 56 am Schweißbrenner 10 den Schweißprozess, so wird das Positionserfassungssystem gestartet, wodurch eine ständige Positionsbestimmung des Schweißbrenners 10 im dreidimensionalen Raum durchgeführt wird und die ermittelten Positionen mit den Referenzwerten verglichen werden. Bringt nun der Schweißer den Schweißbrenner 10 an eine der Startpositionen 53, so werden von der Auswerteeinheit 40 bzw. von der Steuervorrichtung 4 des Schweißgerätes 1 die zur Startposition 53 hinterlegten Schweißparameter und Zusatzfunktionen vorzugsweise automatisch eingestellt. Anschließend wird erst die Zündung für den Lichtbogen 15 aktiviert und der Schweißvorgang durchgeführt. Während des Schweißprozesses ist es vorteilhaft, wenn ein ständiger Vergleich der aktuellen Position des Schweißbrenners 10 mit den hinterlegten Referenzwerten erfolgt. Dadurch kann dem Schweißer beispielsweise mitgeteilt werden, ob die aktuelle Schweißgeschwindigkeit bzw. die Haltung des Schweißbrenners 10, verglichen mit den hinterlegten Referenzwerten, korrekt ist, wie dies in den Fig. 8 und 9 näher beschrieben wird. Erkennt die Auswerteeinheit 40 aufgrund der von den Sensoren 36-38 gelieferten Messdaten die Endposition 54 der Schweißnaht 32, wird der Schweißprozess beispielsweise automatisch beendet.

Dadurch kann der Schweißprozess vereinfacht und beschleunigt werden, da der Schweißer nur einmal die Schweißanlage für ein Werkstück 16 konfiguriert bzw. die Referenzwerte aufnimmt. Bei den folgenden, gleichartigen Werkstücken 16 erfolgt eine selbstständige Anpassung für die verschiedenen durchzuführenden Schweißprozesse bzw. zu erzeugenden Schweißnähte 32. Somit muss der Schweißer bei unterschiedlichen Schweißparametern bzw. Betriebsarten nicht mehr von Hand das Schweißgerät 1 für die entsprechend zu erzeugende Schweißnaht 32 umstellen, sondern dies erfolgt vollautomatisch. Dadurch können Fehleinstellungen verhindert werden und die Herstellzeiten für ein Werkstück 16 wesentlich verkürzt werden.

Selbstverständlich kann die Startposition 53 der Schweißnaht 32 auch eine Toleranzgrenze bzw. einen Bereich 61 aufweisen, innerhalb dem die Startposition 53 als solche erkannt wird und innerhalb dem eine Aktivierung des Schweißprozesses möglich ist. Dies hat den Vorteil, dass dadurch der Schweißer den Schweißbrenner 10 nicht exakt auf die vorgegebene Position bringen muss. Beispielsweise kann am Schweißbrenner 10 ein Anzeigeelement, z.B. eine Leuchtdiode, angeordnet sein, die aktiviert wird, wenn der Schweißer mit dem Schweißbrenner 10 in den Bereich 61 der Startposition 53 kommt. Selbstverständlich ist auch ein akustisches Signal möglich.

Sind alle Schweißnähte 32 eines Werkstücks 16 geschweißt, kann der Schweißer ein weiteres, gleichartiges Werkstück 16 fertigen, wobei er die Position der Spannvorrichtung 29 nicht verändert, so dass die gespeicherten Referenzpunkte auch für das nächste Werkstück 16 verwendet werden können.

Weiters können mit dem Erkennen der Position des Schweißbrenners 10 eine Reihe von Zusatzfunktionen durchgeführt werden bzw. Zusatzanwendungen realisiert werden.

Beispielsweise kann die Anzahl der zu schweißenden Schweißnähte 32 pro Werkstück 16 überwacht werden. Aufgrund der hinterlegten Startpositionen 53 der Schweißnähte 32 eines Werkstücks 16 als Referenzwerte ist die Anzahl der Schweißnähte 32 pro Werkstück 16 definiert. Hierbei wird beim Abarbeiten der einzelnen Schweißnähte 32 von der Steuervorrichtung 4 bzw. der Auswerteeinheit 40 die jeweils angefahrene Startposition 53 erfasst. Somit wird bei der Schweißung eines gleichartigen Werkstücks 16 erkannt, wenn eine Schweißnaht 32 nicht geschweißt wurde, da diese Startposition 53 vom Schweißer mit dem Schweißbrenner 10 nicht angefahren wurde. Dadurch wird eine Qualitätsüberwachung, insbesondere ob alle erforderlichen Schweißnähte 32 geschweißt wurden, möglich. Ernst nach Abfertigung aller Schweißnähte 32 eines Werkstücks 16 werden wiederum alle Startpositionen 53 freigegeben, und der Schweißer kann ein neues Werkstück 16 bearbeiten.

Beispielsweise kann auch durch die Qualitätsüberwachung die Anzahl der korrekt gefertigten Werkstücke 16 erfasst werden. Dies kann über die Anzahl der geschweißten Schweißnähte 32 der gleichartigen Werkstücke 16 ermittelt werden. Daraus kann dann die Anzahl der korrekt gefertigten Werkstücke 16 erfasst werden. Bevorzugt wird hierzu das Schweißgerät 1 bzw. die Auswerteeinheit 40 an ein Netzwerk angeschlossen, so dass die entsprechenden Daten beispielsweise in eine Lagerverwaltung, insbesondere an ein Lagerverwaltungsprogramm, übermittelt werden können.

Ebenso kann dieses System für die Schulung eingesetzt werden, da die Schweißnähte 32 durch die Führung des Schweißbrenners 10 entlang der Schweißnähte 32 simuliert werden können. Der Schüler kann die richtige Haltung des Schweißbrenners 10 üben, ohne den Schweißprozess zu starten. Auch ist es dabei möglich, dass bei gleichzeitiger Überwachung der Führungsgeschwindigkeit des Schweißbrenners 10 der Schüler das Einhalten einer vorgegebenen Schweißgeschwindigkeit erlernen kann. Die Überwachung der Geschwindigkeit kann nämlich bei diesem System einfach durchgeführt werden, da lediglich die Zeit zwischen zwei Positionen erfasst werden muss, aus der dann die Geschwindigkeit ermittelt wird.

Grundsätzlich ergeben sich durch den Vergleich von gespeicherten 3D-Positionen des Schweißbrenners 10, also den Referenzwerten, mit den tatsächlichen 3D-Positionen des Schweißbrenners 10 während eines Schweißprozesses eine Vielzahl von möglichen Verfahrensabläufen, die entweder fix im Schweißgerät 1 bzw. der Auswerteeinheit 40 hinterlegt sind oder vom Benutzer ausgewählt werden können. Damit kann eine Anpassung bestimmter Abläuft für die Schweißung an einem Werkstück 16 vorgenommen werden.

Hierzu ist es beispielsweise möglich, dass das Schweißgerät 1 derart eingestellt wird, dass nicht zwingend eine bestimmte Reihenfolge der zu schweißenden Schweißnähte 32 am Werkstücks 16 durchgeführt werden muss. Daher kann beispielsweise ein Schweißer mit dem Verschweißen von Grundteil 49 und Seitenteil 51 starten, ein zweiter Schweißer mit Grundteil 49 und Rückteil 50 und ein dritter Schweißer mit Grundteil 49 und Seitenteil 52, also ein so genannter Fließbandablauf mit ein und demselben Schweißgerät 1 oder mit mehreren hintereinander angeordneten Schweißgeräten 1 durchgeführt werden. Hierbei wird beim Erfassen der Startpositionen 53 der Schweißnähte 32 keine Reihenfolge abgespeichert, wodurch beim Schweißen mit Hilfe der Referenzwerte die Reihenfolge beliebig gewählt werden kann.

Selbstverständlich kann es vorkommen, dass beim Schweißen bestimmter Werkstücke 16 (nicht dargestellt) eine gewisse Reihenfolge der Schweißnähte 32 eingehalten werden muss. Hierbei wird beim Erfassen der einzelnen Startpositionen 53 einer Schweißnaht 32 eine entsprechende Zusatzfunktion, beispielsweise eine Nummer, zur 3D-Position des Schweißbrenners 10 hinterlegt, so dass der Schweißer eine entsprechende Reihenfolge einhalten muss. Dadurch ist es nicht möglich, dass die Schweißung an einer Startposition 53 mit einer hinterlegten Nummer für die Reihenfolge, beispielsweise 4, gestartet wird, wenn die vorhergehende Schweißung, beispielsweise mit der zur Startposition 53 gespeicherten Nummer 3, noch nicht durchgeführt wurde.

Die Schweißrichtung des Schweißers, d.h. ob der Schweißer den Schweißbrenner 10 in der linken oder der rechten Hand führt, bestimmt die Startposition 53 einer Schweißnaht 32. Ist die Schweißrichtung entgegengesetzt der durch die Referenzwerte definierten Richtung, kann die Auswertevorrichtung 31 aufgrund der aktuellen Position des Schweißbrenners 10 eine neue Startposition 53 berechnen. Das heißt, dass der ursprünglich als Endposition 54 definierte Referenzwert als Startposition 53 dient. Weiters wird ebenso der Referenzwert für die Haltung des Handschweißbrenners 10 an die Schweißrichtung des Schweißers angepasst. Somit kann die Endposition 54 ebenso als Startposition 53. dienen. Dies ist entsprechend hinterlegt, da ein Schweißprozess nur an einer als Startposition 53 bzw. Endposition 54 definierten Position gestartet werden kann.

Wird ein Schweißprozess ungewollt unterbrochen, erkennt dies die Steuervorrichtung 4, und es wird diese Position beispielsweise vorübergehend als Startposition 53 gespeichert. Dadurch kann der Schweißer die unterbrochene Schweißnaht 32 bis zur Endposition 54 zu Ende schweißen.

Durch die ständige Auswertung der von den Sensoren 36-38 gelieferten Messdaten wird von der Auswerteeinheit 40 erkannt, wenn sich der Schweißer mit dem Schweißbrenner 10 an der Startposition 53 einer Schweißnaht 32 befindet, also ein gleichartiges Werkstück 16 mit Hilfe der hinterlegten Referenzwerte gefertigt wird. Hierzu ist es erforderlich, dass die gleichartigen Werkstücke 16 an der gleichen Position am Werktisch 28 befestigt werden.

Ebenso ist es möglich, dass für jede am Werkstück 16 zu schweißende Schweißnaht 32 eine Zusatzfunktion, beispielsweise eine Nummer, in dem im Schweißbrenner 10 integrierten Speicher 48 gespeichert wird. Hierbei sind die 3D-Positionen, die Schweißparameter, usw. beispielsweise in der Steuervorrichtung 4, in einem oder mehreren Schweißgeräten 1, hinterlegt. Damit aufgrund der Position des Schweißbrenners 10 die Schweißparameter für die Schweißnaht 32 von verschiedenen Schweißgeräten 1 entsprechend eingestellt werden können, wird der Wert für die entsprechende Schweißnaht 32 über den Datenbus 42 oder die Funkverbindung an die Steuervorrichtung 4 des angeschlossenen Schweißgerätes 1 übermittelt, welches die Schweißparameter einstellt. Dadurch ist der Schweißbrenner 10 unabhängig von der Stromquelle 2 bzw. dem Schweißgerät 1 und der Schweißer kann den Schweißbrenner 10 an einem geeigneten Schweißgerät 1 anschließen.

Selbstverständlich kann der Schweißer nach Beendigung der Fertigung eines Werkstücks 16 ein neues Werkstück 16 fertigen. Beispielsweise wurden für das neue Werkstück 16 bereits die Referenzwerte erfasst. Für das neue Werkstück 16 ist die Spannvorrichtung 29 entsprechend am Werktisch 28 zu positionieren, wobei die Position der Spannvorrichtung 29 am Werktisch 28 beliebig gewählt werden kann. Somit können Werkstücke 16 unterschiedlicher Größe gefertigt werden.

Dadurch ist es möglich, für die verschiedenen Werkstücke 16 Referenzwerte zu erfassen und abzuspeichern. Um einen doppelten Referenzwert zu vermeiden, d.h., dass zwei unterschiedliche Werkstücke 16 einen gleichen Referenzwert aufweisen, kann den unterschiedlichen Werkstücken 16 eine Kennung zugewiesen werden. Dadurch ist jeder gespeicherte Referenzwert eindeutig definiert.

Dies bedeutet beispielsweise, dass hinter der Kennung bzw. Nummer "1" ein Werkstück 16 mit den entsprechenden Referenzwerten hinterlegt ist, hinter der Nummer "2" ein zweites Werkstück 16 mit den entsprechenden Referenzwerten hinterlegt ist, usw.. In der Praxis bedeutet dies, dass der Schweißer, um das Werkstück 16, welches der Nummer "1" entspricht, schweißen zu können, beispielsweise über ein Einstellorgan am Schweißbrenner 10 oder am Schweißgerät 1 die entsprechende Nummer "1" einstellt. Hierauf werden die entsprechenden Referenzwerte, welche hinter Nummer' "1" hinterlegt sind, herangezogen, und es werden die dementsprechenden Schweißparameter eingestellt. Hierbei können die Nummer und die Referenzwerte im Speicher 48 im Schweißbrenner 10 oder im Schweißgerät 1 oder nur die Nummer für das Werkstück 16 im Schweißbrenner 10 und die Referenzwerte im Schweißgerät 1 gespeichert sein. Wechselt der Schweißer das Werkstück 16, muss er die entsprechende Nummer am Schweißbrenner 10 einstellen und die Spannvorrichtung 29 entsprechend am Werktisch 28 positionieren.

Dabei kann auch die Position der Spannvorrichtung 29 für das entsprechende Werkstück 16 gespeichert werden. Dadurch kann beim Fertigen eines gleichartigen Werkstücks 16 auf einfache Weise die Spannvorrichtung 29 korrekt positioniert werden, beispielsweise über eine Anzeige an der Spannvorrichtung 29. Ebenso kann das Werkstück 16 gedreht werden, wodurch die Handhabung für den Schweißer erleichtert wird. Hierbei werden die Referenzwerte. entsprechend an die Position der Spannvorrichtung 29 angepasst. Dies kann beispielsweise so erfolgen, dass an der Spannvorrichtung 29 ein Ausgangspunkt festgelegt wird, so dass der Schweißer den Schweißbrenner 10 anschließend am Ausgangspunkt positioniert und beispielsweise durch Betätigen eines Tasters einen Abgleich durchführt, wodurch die Referenzwerte in Bezug auf den Ausgangspunkt neu berechnet werden.

Weiters kann aufgrund der Position der Spannvorrichtung 29 und/oder der gespeicherten Referenzwerte das zu fertigende Werkstück 16 automatisch erkannt werden. Hierbei werden die entsprechenden Schweißparameter für die Schweißnähte.32 des Werkstücks 16 für den Schweißvorgang eingestellt. Ebenso wird beispielsweise auch die Reihenfolge der Schweißnähte 32 berücksichtigt. Sollte sich jedoch ein Referenzwert des zu fertigenden Werkstücks 16 mit einem Referenzwert eines weiteren Werkstücks 16 überschneiden, wird der Schweißer durch entsprechende Maßnahmen darauf aufmerksam gemacht, das Werkstück 16 über die Eingabe der entsprechenden Kennung bzw. Nummer zu definieren.

Es ist aber auch möglich, dass die Referenzwerte für ein Werkstück 16 au die Position der Spannvorrichtung 29 angepasst werden. Dadurch kann das Werkstück 16 an einer vom Schweißer bevorzugten Stelle am Werktisch 28 befestigt werden, wobei anschlieβend ein Abgleich der Referenzwerte auf die neue Position des Werkstücks 16 am Werktisch 28 durchgeführt wird.

Gemäß einem Ausführungsbeispiel des Schweißbrenners 10 ist der Sender 33 als Spule ausgeführt, wobei die Spule an einer festen, beliebigen Position im Schweißprozessbereich 27 montiert ist. Die Spule erzeugt im stromdurchflossenen Zustand ein Magnetfeld, welches als Signal 34 dient. Damit die Sensoren 36-38 bzw. 43-45 des Empfängers 35 im Schweißbrenner 10 das Magnetfeld des Senders 33 messen können, sind diese als magnetoresistive Sensoren 36-38 bzw. 43-45 ausgeführt. Hierbei ändert das Magnetfeld der Spule die elektrische Leitfähigkeit der Sensoren 36-38 bzw. 43-. 45, wodurch diese ihren Widerstandswert ändern, die als Messdaten zur Bestimmung der dreidimensionalen Position des Schweißbrenners 10 dienen.

Damit die Auswerteeinheit 40 aus den Widerstandswertänderungen der Sensoren 36-38 bzw. 43-45 eine 3D-Position berechnen kann, ist bevorzugt in der Auswerteeinheit 40 ein Referenzpunkt 62 hinterlegt. Dieser gibt die Widerstandswerte der Sensoren 36-38 bzw. 43-45 an einer vordefinierten Position im Schweißprozessbereich 27, beispielsweise einer Ecke des fest montierten Werktisches 34, an. Dadurch erfolgt ein Abgleich des Positionserfassungssystems. Ebenso ist es möglich, dass am Referenzpunkt 62 ebenfalls magnetoresistive Sensoren angebracht werden. Hierbei kann die Auswerteeinheit 40 in Bezug auf die Messdaten der Sensoren 36-38 bzw. 43-45 vom Referenzpunkt 62 die Position des Schweißbrenners 10 bestimmen. Dadurch wird erreicht, dass der Werktisch 28 frei bewegt werden kann.

Weiters wird das vom Sender 33 bzw. der Spule als Signal 34 erzeugte Magnetfeld durch andere Störmagnetfelder, beispielsweise das vom Schweißgerät 1 erzeugte Magnetfeld und insbesondere das vom Lichtbogen 15 erzeugte Magnetfeld, überlagert, wodurch die Messdaten der Sensoren 36-38 bzw. 43-45 beeinflusst werden. Daher ist beispielsweise im Empfänger 35 oder der Auswerteeinheit 40 eine Filtereinrichtung 39 integriert, welche insbesondere die bekannten Störmagnetfelder filtert. Dies kann beispielsweise durch eine diskrete Fourier Transformation (DFT) erfolgen. Somit erhält die Auswerteeinheit 40 gefilterte, korrekte Messdaten und kann anhand dieser und des Referenzpunktes 62 die Position des Schweißbrenners 10 im dreidimensionalen Raum exakt bestimmen. Dadurch können die Positionen des Schweißbrenners 10 mit den entsprechenden Schweißparametern für eine Schweißnaht 32 eines Werkstücks 16, wie die Startposition 53 und die Endposition 54, erfasst und gespeichert werden. Die gespeicherten Werte werden als Referenzwerte beim Fertigen gleichartiger Werkstücke 16 herangezogen, wobei die Schweißparameter, die zu den entsprechenden Referenzwerten hinterlegt sind, vorzugsweise automatisch von der Steuervorrichtung 4 eingestellt werden.

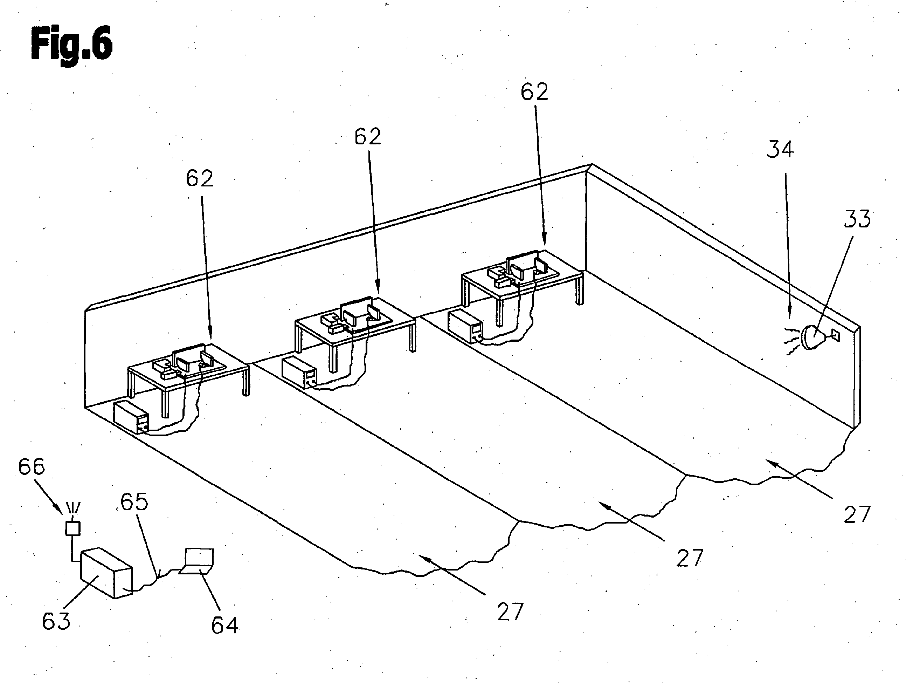

In Fig. 6 ist ein Ausführungsbeispiel dargestellt, bei dem der Sender 33 mehrere Schweißprozessbereiche 27 mit dem Signal 34, versorgt. Dabei muss das Signal 34 aufgrund der erhöhten Reichweite entsprechend mehr verstärkt werden, als wenn nur ein Schweißprozessbereich 27 von dem fest montierten Sender 33 versorgt wird. Wird als Sender 33 eine Spule eingesetzt, welche ein Magnetfeld als Signal 34 erzeugt, sind bei der Filterung der bekannten Störmagnetfelder durch die Filtereinrichtung 39 zusätzlich die bekannten Störmagnetfelder der benachbarten Schweißprozessbereiche 27 zu berücksichtigen. Weiters weist beispielsweise jeder Schweißprozessbereich 27 einen eigenen Referenzpunkt 62 auf, wodurch von der Auswerteeinheit 40 die zugehörige 3D-Position des Schweißbrenners 10 ermittelt wird. Ebenso können die einzelnen Schweißprozessbereiche 27 einen gemeinsamen Referenzpunkt 62 (nicht dargestellt) besitzen, welcher in den Auswerteeinheiten 40 hinterlegt ist.

Als Sender 33 kann beispielsweise auch eine Funkstation, eine Radarstation oder ein Lokales Positionserfassungssystem (LPS) eingesetzt werden. Hierbei müssen entsprechende Sensoren 36-38 bzw. 43-45 eingesetzt werden und die Filtereinrichtung 39 muss entsprechend an die Störquellen angepasst werden. Diese Systeme werden bevorzugt bei mehreren Schweißprozessbereichen 27 bzw. für größere Distanzen zwischen Sender 33 und Empfänger 35 eingesetzt.

Selbstverständlich kann die Datenkommunikationseinheit 41 des Empfängers 35 die Messdaten der Sensoren 36-38 bzw. 43-45 eines Schweißprozessbereiches 27 zur Bestimmung der Position des Schweißbrenners 10 an eine externe Auswerteeinheit 63 übermitteln. Ebenso können hier die erfassten 3D-Positionen des Schweißbrenners 10 als. Referenzwerte gespeichert werden.

Weiters kann in der Auswerteeinheit 40 bzw. der externen Auswerteeinheit 63 eine Schnittstelle für externe Geräte integriert sein, wodurch ein Datenaustausch ermöglicht wird. Hierbei können beispielsweise die gespeicherten Daten zur Auswertung von einem Computer 64, welcher über ein Kabel 65 mit der externen Auswerteeinheit 63 verbunden werden kann, ausgelesen werden. Ebenso kann der Computer 64 über eine Funkverbindung (nicht dargestellt) mit der externen Auswerteeinheit 63 verbunden sein. Wird eine 3D-Position des Schweißbrenners 10 als Referenzwert, beispielsweise eine Startposition 53 einer Schweißnaht 32, erkannt, werden die zugehörigen, hinterlegten Schweißparameter von der externen Auswerteeinheit 63 an das Schweißgerät 1 übermittelt.

Dies erfolgt beispielsweise über eine Funkeinheit 66, wobei das Schweißgerät 1 die übermittelten Daten empfängt und insbesondere die Schweißparameter einstellt.

Ebenso kann die externe Auswerteeinheit 63 für alle im Raum befindlichen Schweißprozessbereiche 27 verantwortlich sein. Vorteilhaft ist hierbei, dass die gespeicherten Daten der externen Auswerteeinheit 63, beispielsweise über den Computer 64, zentral ausgelesen werden können bzw. bevorzugt Referenzwerte für die Schweißnähte 32 von Werkstücken 16 eingespielt werden können.

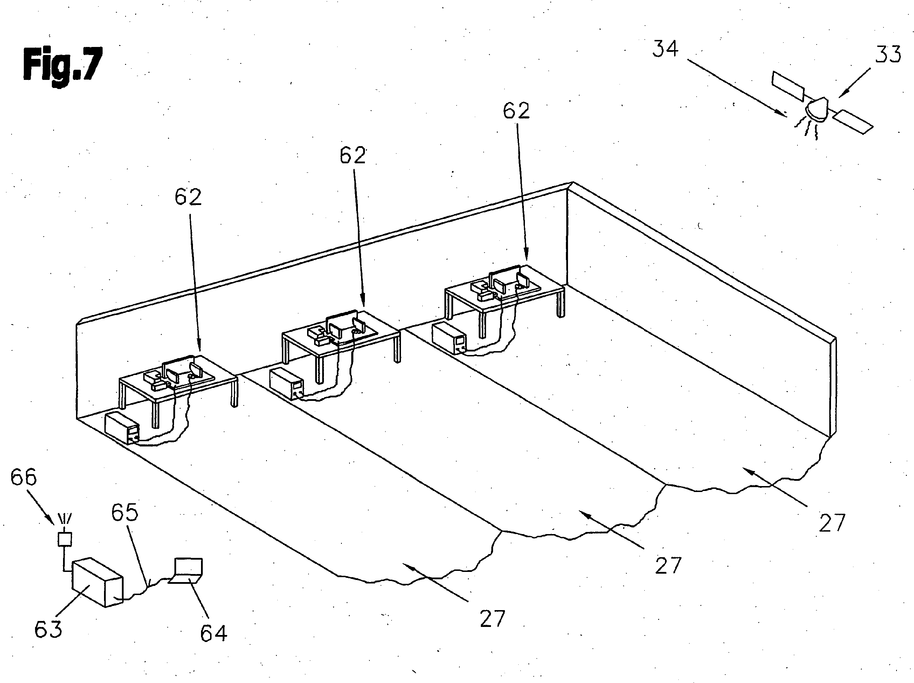

Als Sender 33 kann ebenso ein Satellit eingesetzt werden, wie dies nachfolgend anhand Fig. 7 näher beschrieben wird. Dabei versorgt der Sender 33 einen oder mehrere Schweißprozessbereiche 27 mit dem Signal 34, wobei sich der Sender 33 frei beweglich, außerhalb des Raumes befindet. Die Versorgung der Schweißprozessbereiche 27 kann beispielsweise mit dem Signal 34 der bekannten GPS-Satelliten erfolgen. Dementsprechend werden die im Schweißbrenner 10 integrierten Sensoren 36-38 bzw. 43-45 des Empfängers 35 durch einen so genannten GPS-Empfänger ersetzt, welcher die Messdaten an die Datenkommunikationseinheit 41 und in weiterer Folge an die Auswerteeinheit 40 oder die externe Auswerteeinheit 63 übermittelt. Daraus werden die 3D-Positionen des Schweißbrenners 10 bzw. die daraus resultierenden Positionen für die Schweißnähte 32 des Werkstücks 16 erfasst und als Referenzwerte mit den entsprechenden Schweißparametern gespeichert. Wie bereits bekannt, werden die Referenzwerte zum Fertigen von gleichartigen Werkstücken 16 herangezogen.

Weiters können die Referenzwerte auch für Korrekturmaßnahmen während eines Schweißprozesses herangezogen werden, wie dies nachfolgend anhand der Figuren 8 und 9 beschrieben wird. Dabei ist ein Ausführungsbeispiel dargestellt, bei dem während des Schweißprozesses die aktuelle dreidimensionale Position des Schweißbrenners 10 mit den hinterlegten Referenzwerten verglichen wird.

Wie bereits beschrieben, werden bei der Positionserfassung des Schweißbrenners 10 während eines Schweißvorganges der Schweißnähte 32 des Werkstücks 16 die dreidimensionalen positionen als Referenzwerte mit den entsprechenden Schweißparametern gespeichert. Deshalb können die Referenzwerte auch zum Zweck der Überwachung und Korrektur eingesetzt werden. Beispielsweise zur Überwachung der korrekten Haltung des Schweißbrenners 10 und der Schweißgeschwindigkeit während eines Schweißprozesses eines gleichartigen Werkstücks 16, wie dies nachfolgend getrennt beschrieben ist. Gegebenenfalls werden aufgrund der Ergebnisse der Überwachung Korrekturmaßnahmen eingeleitet, um eine optimale Schweißqualität zu gewährleisten. Selbstverständlich werden die Referenzwerte auch zur Erkennung der Position des Schweißbrenners 10 und der Startpositionen 53 einer Schweißnaht 32 herangezogen.

Gemäß Fig. 8 wird eine vorgegebene Schweißgeschwindigkeit v während eines Schweißprozesses überwacht und ein Unterschreiten der Schweißgeschwindigkeit v erkannt.

Wie dargestellt, wurden bei der Positionserfassung des Schweißbrenners 10 für eine Schweißnaht 32 zur Verbindung des Grundteils 49 und Seitenteils 51 des Werkstücks 16 gemäß Fig. 15, die Startposition 53 und Endposition 54 und vier weitere 3D-Positionen 57, 58, 59 und 60 zwischen Startposition 53 und Endposition 54, beispielsweise nach einem vorgegeben Zeitintervall 55, erfasst. Da mit dem Definieren der Startposition 53 eine Zeitnehmung gestartet wird, wurde zu den Positionen 57, 58, 59 und 60 und zur Endposition 54 die Zeit hinterlegt. Aus den Positionsangaben kann die Strecke s der Schweißnaht 32 berechnet werden, woraus in weiterer Folge über die bekannten Zeiten die Schweißgeschwindigkeit v berechnet werden kann. Die Schweißgeschwindigkeit v wird zusätzlich zum Referenzwert der 3D-Position des Schweißbrenners 10 gespeichert.

Der Schweißer sollte nun bei einem Schweißvorgang die durch die Referenzwerte vorgegebene Schweißgeschwindigkeit v einhalten, um eine optimale Qualität der Schweißnaht 32 zu erreichen. Dies erfolgt durch einen Vergleich der aktuellen Position des Schweißbrenners 10, dem Ist-Wert, nach Ablauf des Zeitintervalls 55 mit dem hinterlegten Referenzwert.

Erkennt die Auswerteeinheit 40 die aktuelle Position des Schweißbrenners 10 als Referenzwert für die Startposition 53 und der Schweißer aktiviert den Schweißprozess, werden die Schweißparameter entsprechend eingestellt und die Zeitnehmung gestartet. Ist das Zeitintervall 55 abgelaufen, erfolgt eine Ist-Wert Aufnahme, wobei die aktuelle Position des Schweißbrenners 10 von der Auswerteeinheit 40 ermittelt und mit dem zugehörigen Zeitwert gespeichert wird. Hierbei werden die aktuellen Werte mit den Referenzwerten verglichen und das Ergebnis ausgewertet. Eine korrekte Schweißgeschwindigkeit v ist vorhanden, wenn der Ist-Wert mit dem Referenzwert übereinstimmt bzw. innerhalb einer vorgegebenen Toleranzgrenze liegt, wie dies bei den Positionen 57 und 58 der Fall ist.

Ergibt sich aus dem Vergleich Ist-Wert zu Referenzwert, dass der Ist-Wert die Toleranzgrenze des Referenzwertes beispielsweise unterschreitet, resultiert während diesem Zeitintervall 55 eine zu geringe Schweißgeschwindigkeit v, wie dies zwischen Position 58 und Position 67 und dem Verlauf der Schweißgeschwindigkeit v über die Strecke s der Schweißnaht 32 ersichtlich ist. Damit die erforderliche Qualität der Schweißnaht 32 annähernd beibehalten werden kann, werden von der Steuervorrichtung 4 aufgrund der Ist-Wert Position des Schweißbrenners 10 die Schweißparameter entsprechend angepasst, beispielsweise der Schweißstrom abgesenkt. Durch derartige Korrekturmaßnahmen während des Schweißprozesses kann beispielsweise ein Durchschmelzen des Werkstücks 16 verhindert werden.

Um die gewünschte Schweißgeschwindigkeit v wieder zu erreichen, kann dem Schweißer beispielsweise über ein Warnsignal mitgeteilt werden, dass dieser die Schweißgeschwindigkeit v erhöhen bzw. verringern soll. Dies erfolgt beispielsweise derart, dass ein Warnsignal im höheren hörbaren Frequenzbereich dem Schweißer vorgibt, die Schweißgeschwindigkeit v entsprechend zu erhöhen. Hierzu werden von der Steuervorrichtung 4 oder der Auswerteeinheit 40 entsprechende Referenzwerte und Schweißparameter für das folgende Zeitintervall 55 berechnet. Dementsprechend wird die Schweißgeschwindigkeit v bis zur berechneten Position 68 erhöht, wobei ab der Position 68 die erhöhte Schweißgeschwindigkeit v wieder abgesenkt wird. Hierzu wird beispielsweise dem Schweißer ein Warnsignal mit niedrigerer Frequenz vorgegeben.

Somit wird die aktuelle Schweißgeschwindigkeit v an die durch die Referenzwerte vorgegebene Schweißgeschwindigkeit v allmählich angepasst, bis die vordefinierte Schweißgeschwindigkeit v zur Position 60 wieder erreicht ist und das Warnsignal verstummt. Während dieses Zeitintervalls 55, also zwischen Position 68 und Position 60, erfolgt kein Vergleich des Ist-Wertes mit dem Referenzwert von Position 59, da dieser Ist-Wert bereits bei der Position 67 frühzeitig ausgewertet wurde.

Da zur Position 60 der Ist-Wert der Position des Handschweißbrenners 10 wieder mit dem Referenzwert übereinstimmt, kann die Schweißnaht 32 ab der Position 60 wieder mit der vordefinierten Schweißgeschwindigkeit v bis zur Endposition 54 fertig geschweißt werden. Es können auch mehrere derartige Referenzwerte gespeichert werden, so dass eine genauere Geschwindigkeitsüberwachung durchgeführt werden kann.

In Fig. 9 ist ein Ausführungsbeispiel dargestellt, bei dem ein vorgegebener Anstellwinkel 69 bzw. die Haltung des Schweißbrenners 10 während eines Schweißprozesses überwacht und eine Veränderung erkannt wird.

Erfindungsgemäß wird ein Schweißprozess nur mit einer 3D-Position des Schweißbrenners 10 für eine Schweißnaht 32 zugelassen, welche als Referenzwert für eine Startposition 53 einer Schweißnaht 32 gespeichert wurde. Ebenso wird bevorzugt der in Fig. 4 beschriebene Schweißbrenner 10 eingesetzt, wodurch zusätzlich zur Startposition 53 die Haltung bzw. der Anstellwinkel 69 des Schweißbrenners 10 berücksichtigt wird. Bei dieser Ausführung des Schweißbrenners 10 ergeben sich aus den Sensoren 36-38 bzw. 43-45 zwei Positionswerte des Schweißbrenners 10, welche beispielsweise in der Auswerteeinheit 40 als Referenzwert gespeichert werden. Hierbei dient beispielsweise die berechnete Position des Schweißbrenners 10 aus den Messdaten der Sensoren 43-45 als Referenzwert für die resultierende Schweißnaht 32. Die berechnete 3D-Position des Schweißbrenners 10 aus den Messdaten der Sensoren 36-38 dienen als Referenzwerte für die Haltung des Schweißbrenners 10.

Somit wird beim Fertigen eines gleichartigen Werkstücks 16 bei Erkennen einer 3D-Position des Schweißbrenners 10 als Referenzwert auf die Haltung des Schweißbrenners 10 Rücksicht genommen. Dadurch werden nur dann die Schweißparameter automatisch eingestellt, wenn beide 3D-Positionen des Schweißbrenners 10 mit den zugehörigen hinterlegten Referenzwerten übereinstimmen bzw. in einem vordefinierten Toleranzbereich liegen. Somit kann ein Schweißprozess nur an einer definierten Startposition 53 mit der korrekten Haltung des Schweißbrenners 10 gestartet werden, wie dies an der Startposition 53 ersichtlich ist.

Beispielsweise wird nach einem vordefinierten Zeitintervall 55 zur Position 57 der Schweißnaht 32 der Ist-Wert für den Anstellwinkel 69 des Schweißbrenners 10 von der Auswerteeinheit 40 ermittelt und mit dem dazugehörigen Referenzwert verglichen. Liegt der Ist-Wert des Anstellwinkels 69 des Schweißbrenners 10 innerhalb der Toleranzgrenze des Referenzwertes, wird bevorzugt von der Steuervorrichtung 4 nicht in den Schweißprozess eingegriffen. Dies ist gemäß Fig. 9 bei den Positionen 57 und 58 der Schweißnaht 32 der Fall.

Verändert der Schweißer beispielsweise innerhalb des darauf folgenden Zeitintervalls 55, d.h. zwischen Position 58 und Position 59, die Haltung bzw. den Anstellwinkel 69 des Schweißbrenners 10, liegt der Ist-Wert des Anstellwinkels 68 des Schweißbrenners 10 oberhalb der Toleranzgrenze des Referenzwertes. Somit ergibt sich ein steilerer Anstellwinkel 69, wie dies zur Position 59 der Fall ist. Dies ist aus dem Verlauf des Anstellwinkels 68 über der Strecke s der Schweißnaht 32 ersichtlich. Von der Steuervorrichtung 4 werden die Schweißparameter entsprechend an die veränderte Haltung des Schweißbrenners 10 angepasst, wodurch die Qualität der Schweißnaht 32 annähernd gleich gehalten wird. Weiters kann der Schweißer darauf aufmerksam gemacht werden, die vorgegebene Haltung des Schweißbrenners 10 wieder einzunehmen. Dies erfolgt beispielsweise im darauf folgenden Zeitintervall 55, d.h. zwischen Position 59 und Position 60, über entsprechende Warnsignale. Hierbei wird der Anstellwinkel 69 abgesenkt und somit allmählich an den durch die Referenzwerte vorgegebenen Anstellwinkel 69 bis zur Position 60 angepasst, womit das Warnsignal verstummt. Somit kann die Schweißnaht 32 mit dem korrekten Anstellwinkel 69 zu Ende geschweißt werden.

Im Allgemeinen sei zu den Fig. 8 und 9 erwähnt, dass die erkannten und dem Schweißer mitgeteilten Korrekturmaßnahmen, sowie die Fehlhaltungen des Schweißbrenners 10-bzw.falsche Schweißgeschwindigkeiten zusammen mit der 3D-Position des Schweißbrenners 10 gespeichert werden. Anschließend können diese Daten der Korrekturmaßnahmen sowie die Referenzwerte beispielsweise aus der Auswerteeinheit 40, der externen Auswerteeinheit 63 oder der Steuervorrichtung 4 beispielsweise mit einem Computer 64 ausgelesen werden. Dies kann beispielsweise zur Analyse eines durchgeführten Schweißprozesses verwendet werden. Hierbei werden die Unterschiede zwischen der geschweißten Schweißnaht 32, also der Ist-Werte, und den Referenzwerten ersichtlich. Somit erfolgt für die Schweißprozesse bzw. die einzelnen Schweißvorgänge eine automatische Dokumentation über die Qualität der Schweißnähte 32.

Selbstverständlich ist es auch möglich, dass dem Schweißer durch einen ständigen Vergleich von Ist-Wert und Referenzwert, d.h. einen sehr kurzen Zeitintervall 55, die aktuelle Schweißgeschwindigkeit und die Haltung des Schweißbrenners mitgeteilt wird. Dies kann beispielsweise über ein im Schweißhelm integriertes Display oder über Warnsignale erfolgen. Hierzu kann im Schweißhelm eine Empfangsvorrichtung integriert sein, welche die nötigen Daten für die entsprechenden Korrekturmaßnahmen empfängt.

Beispielsweise kann ein im Display dargestellter Pfeil nach oben eine Erhöhung der Geschwindigkeit bedeuten, ein Pfeil nach unten eine Verringerung und keine Anzeige, dass die aktuelle Schweißgeschwindigkeit korrekt bzw. im Toleranzbereich ist. Ebenso kann dies mit Zahlen angezeigt werden. Zusätzlich oder anstelle der Anzeige können beispielsweise über im Schweißhelm integrierte Lautsprecher Warnsignale ertönen. Wie bereits in Fig. 8 beschrieben, kann hierbei ein Ton mit hoher Frequenz bedeuten, die Schweißgeschwindigkeit zu erhöhen, ein Ton mit niedriger Frequenz die Schweißgeschwindigkeit zu verringern und kein Ton, dass die aktuelle Schweißgeschwindigkeit korrekt bzw. im Toleranzbereich ist. Entsprechend können die beschriebenen Anzeigen bzw. Warnsignale auch für einen zu steilen bzw. zu geringen Anstellwinkel 69 verwendet werden, wobei entsprechend eine andere Tonart gewählt wird.

Ebenso können die Schweißgeschwindigkeit v und/oder der Anstellwinkel 69 auf einer Anzeigevorrichtung am Schweißbrenner 10 oder am Werktisch 28 angezeigt bzw. graphisch dargestellt werden. Dies kann beispielsweise für Lernzwecke eingesetzt werden, wobei dem Schweißer während eines Schweißprozesses nötige Korrekturmaßnahmen mitgeteilt bzw. angezeigt werden. Dadurch kann der praktische Lernprozess der unterschiedlichen Schweißverfahren beschleunigt werden. Selbstverständlich kann dies auch dann eingesetzt werden, wenn die zu schweißende Schweißnaht 32 simuliert oder virtuell geschweißt wird, d.h. dass der Schweißprozess nicht gestartet wurde.

In den zuvor beschriebenen Ausführungsbeispielen gemäß den Fig. 2 bis 9 sind die Sensoren 36-38 bzw. 43-45, welche die Messdaten für die Bestimmung der dreidimensionalen Position des Schweißbrenners 10 an die Auswerteeinheit 40 übermitteln, des Empfängers 35 im Schweißbrenner 10 integriert.

Ebenso ist es auch möglich, dass die Sensoren 36-38 bzw. 43-45 in der Arbeitskleidung des Schweißers, insbesondere im Schweißhandschuh, einer Armbanduhr oder in einem Armband integriert sind. Hierbei ist von Vorteil, dass zusätzlich zu den Referenzwerten ein Code für den Schweißer hinterlegt werden kann. Dies erfolgt beispielsweise derart, dass die im Empfänger 35 integrierte Datenkommunikationseinheit 41 einen bestimmten Code zur Auswerteeinheit 40 mitsendet. Daraus kann die Auswerteeinheit 40 einen Namen oder eine Nummer des Schweißers zuordnen, welcher entsprechend hinterlegt wird. Allerdings sind hierbei die Toleranzgrenzen zu erhöhen, da bei einem Wechsel der Arbeitskleidung nicht die exakt gleiche Position wie vor dem Wechsel gewährleistet werden kann.

Anstelle der Sensoren 36-38 bzw. 43-45 kann auch der Sender 33 im Schweißbrenner 10 integriert werden. Hierbei übernimmt der Empfänger 35 die zuvor beschriebenen Aufgaben des Senders 33 und umgekehrt. Somit ist der Empfänger 35 bzw. sind die Sensoren im Raum montiert und über eine Funkverbindung oder einer Kabelverbindung mit der Auswerteeinheit 40 verbunden. Dadurch kann diese wiederum die 3D-Position des Schweißbrenners 10 ermitteln und speichern. Diese Art der Positionserfassungsvorrichtung ist selbstverständlich von der Größe des Senders 33 abhängig, damit dieser die Größe des Schweißbrenners 10 nicht beeinflusst.

Grundsätzlich können das in den Fig. 2 bis 9 beschriebene Verfahren zur Positionserfassung eines Schweißbrenners 10 und das beschriebene System nicht nur bei Handschweißbrennern, sondern auch bei automatisierten Schweißanlagen eingesetzt werden. Hierbei liegt der Fokus insbesondere bei der Qualitätssicherung, d.h., dass die Qualität der Schweißnähte 32 gleichartiger Werkstücke 16 dokumentiert bzw. gespeichert und anschließend analysiert werden kann.

## Patentansprüche

1. Schweißverfahren unter Verwendung eines Schweißbrenners (10), dessen Position bestimmt wird, wobei von einem Sender (33) ein Signal (34) ausgestrahlt wird, welches von zumindest einem im Schweißbrenner (10) integrierten oder diesem zugeordneten Sensor (36) empfangen wird, und die empfangenen Messdaten an eine Auswerteeinheit (40) übertragen, und von der Auswerteeinheit (40) Werte für die Position des Schweißbrenners (10) im dreidimensionalen Raum ermittelt werden, **dadurch gekennzeichnet, dass** zusätzlich zu den Werten der 3D-Positionen die dazugehörigen Schweißparameter für den mit dem Schweißbrenner (10) ausgeführten Schweißprozess gespeichert und für nachfolgende, gleichartige Schweißprozesse als Referenzwerte herangezogen werden.

2. Schweißverfahren nach Anspruch 1, **dadurch gekennzeichnet, dass** die empfangenen Messdaten und bzw. oder die ermittelten Werte der 3D-Position des Schweißbrenners (10) gespeichert werden.

3. Schweißverfahren nach Anspruch 1 oder 2, **dadurch gekennzeichnet, dass** die Werte für die 3D-Position des Schweißbrenners (10) zu beliebigen, festlegbaren Zeitpunkten, insbesondere zu Beginn und am Ende eines mit dem Schweißbrenner (10) ausgeführten Schweißprozesses ermittelt werden.

4. Schweißverfahren nach einem der Ansprüche 1 bis 3, **dadurch gekennzeichnet, dass** zusätzlich zu den Werten der 3D-Positionen die dazugehörigen Zeiten eines mit dem Schweißbrenner (10) ausgeführten Schweißprozesses gespeichert werden.

5. Schweißverfahren nach Anspruch 4, **dadurch gekennzeichnet, dass** die zu den Werten der 3D-Positionen dazugehörigen Zeiten, für nachfolgende, gleichartige Schweißprozesse als Referenzwerte herangezogen werden.

6. Schweißverfahren nach einem der Ansprüche 1 bis 5, **dadurch gekennzeichnet, dass** die ermittelten Werte für die 3D-Positionen, allenfalls mit den dazugehörigen Schweißparametern und Zeiten mit hinterlegten Referenzwerten verglichen und gegebenenfalls die Schweißparameter korrigiert und die vorgenommenen Änderungen gespeichert werden.

7. Schweißverfahren nach einem der Ansprüche 1 bis 6, **dadurch gekennzeichnet, dass** die für die Schweißnahtqualität relevanten Daten,insbesondere die Schweißgeschwindigkeit, Reihenfolge der Schweißnähte (32) und Anstellwinkel (69) des Schweißbrenners (10) während des Schweißprozesses erfasst und gespeichert werden.

8. Schweißverfahren nach einem der Ansprüche 1 bis 7, **dadurch gekennzeichnet, dass** die gespeicherten Werte für die 3D-Positionen des Schweißbrenners (10) zumindest eines durchgeführten Schweißprozesses, allenfalls Referenzwerte und gespeicherte Änderungen zur Analyse ausgelesen werden.

9. Schweißverfahren nach einem der Ansprüche 1 bis 8,**dadurch gekennzeichnet, dass** die Schweißparameter eines Schweißprozesses anhand der ermittelten Werte für die 3D-Position automatisch eingestellt werden.

10. Schweißverfahren nach einem der Ansprüche 1 bis 9, **dadurch gekennzeichnet, dass** die ermittelten Werte für die 3D-Position des Schweißbrenners (10) mit Referenzwerten verglichen und dem Bediener des Schweißbrenners (10) akustisch oder optisch angezeigt werden.

11. Schweißverfahren nach einem der Ansprüche 1 bis 10, **dadurch gekennzeichnet, dass** aus den ermittelten Werten für die 3D-Position in Abhängigkeit der Zeit die Schweißgeschwindigkeit festgestellt und mit vorgegebenen Werten für die Schweiβgeschwindigkeit verglichen wird und dem Bediener des Schweißbrenners (10) akustisch oder optisch angezeigt werden.

12. Schweißverfahren nach einem der Ansprüche 1 bis 11, **dadurch gekennzeichnet, dass** das Starten eines Schweißprozesses nur an vorgegebenen 3D-Positionen des Schweißbrenners (10) ermöglicht wird.

13. Schweißverfahren nach einem der Ansprüche 1 bis 12, **dadurch gekennzeichnet, dass** der Referenzwert für eine 3D-Position des Schweißbrenners (10) der Startposition (53) einer Schweißnaht (32) an die bevorzugte Schweißrichtung des Bedieners des Schweißbrenners (10) angepasst wird.

14. Schweißverfahren nach einem der Ansprüche 1 bis 13, **dadurch gekennzeichnet, dass** die 3D-Position des Schweißbrenners (10) bei deaktiviertem Schweißgerät(1) ermittelt wird.

15. Schweißverfahren nach einem der Ansprüche 1 bis 14, **dadurch gekennzeichnet, dass** die Messdaten zumindest eines in der Arbeitskleidung, insbesondere in einem Armband oder in einem Handschuh des Bedieners des Schweißbrenners (10) integrierten Sensors (43) bevorzugt an die Auswerteeinheit (40) übermittelt werden.

16. Schweißverfahren nach einem der Ansprüche 1 bis 15, **dadurch gekennzeichnet, dass** Referenzwerte, beispielsweise für die Startposition (53) der Schweißnaht (32) und die Schweißparameter, in einem Speicher (48) im Schweißbrenner (10) gespeichert werden.

17. Schweißverfahren nach einem der Ansprüche 5 bis 16, **dadurch gekennzeichnet, dass** zu den Referenzwerten eine Kennung zur Kennzeichnung der Referenzwerte für gleichartige Werkstücke (16) gespeichert wird.

18. Schweißverfahren nach einem der Ansprüche 1 bis 17, **dadurch gekennzeichnet, dass** die Zeit während des mit dem Schweißbrenner (10) ausgeführten Schweißprozesses erfasst wird.

19. Schweißverfahren nach Anspruch 18, **dadurch gekennzeichnet, dass** die ermittelten Werte der 3D-Positionen während eines Schweißprozesses und die dazugehörige Zeit zur Berechnung der Schweißgeschwindigkeit des Schweißprozesses an die Steuervorrichtung (4) des Schweißgerätes (1) übermittelt werden.

20. Schweißverfahren nach einem der Ansprüche 1 bis 19, **dadurch gekennzeichnet, dass** der Abstand zwischen dem Sender (33) und einem Referenzpunkt im dreidimensionalen Raum abgeglichen wird.

21. Schweißsystem, mit einem Schweißgerät (1) und einem über ein Schlauchpaket (23) anschließbaren Schweißbrenner (10), wobei eine Vorrichtung zur Bestimmung der Position des Schweißbrenners (10) vorgesehen ist, wobei zur Bestimmung der Position des Schweißbrenners (10) im dreidimensionalen Raum zumindest ein Sender (33) und zumindest ein Sensor (36) im Schweißbrenner (10) angeordnet oder diesem zugeordnet ist, welcher Sensor (36) mit einer Auswerteeinheit (40) verbunden ist, so dass die Werte der 3D-Position des Schweißbrenners (10) über die vom Sensor (36) erfassten Messdaten ermittelbar sind, **dadurch gekennzeichnet, dass** im Schweißbrenner (10) ein Speicher (48) zum Speichern der ermittelten Werte für die 3D-Position des Schweißbrenners (10) sowie der dazugehörigen Schweißparameter für einen mit dem Schweißbrenner (10) ausgeführten Schweißprozess vorgesehen ist.

22. Schweißsystem nach Anspruch 21, **dadurch gekennzeichnet, dass** der Sender (33) durch eine Spule, eine Funkstation, eine Radarstation oder aus beweglichen Sendern (33) wie Satelliten, insbesondere gemäß dem GPS-System, gebildet ist.

23. Schweißsystem nach Anspruch 21 oder 22, **dadurch gekennzeichnet, dass** der Sender (33) der Positionserfassungsvorrichtung zumindest eine Spule zur Erzeugung eines Magnetfeldes im Bereich (27) des Schweißprozesses des Schweißbrenners (10) aufweist, und dass zumindest ein Sensor (36) zum Erfassen des von der Spule erzeugten Magnetfeldes im Schweißbrenner (10) angeordnet oder diesem zugeordnet ist.

24. Schweißsystem nach einem der Ansprüche 21 bis 23, **dadurch gekennzeichnet, dass** der Sender (33) mehrere Schweißprozessbereiche (27) und somit mehrere Schweißbrenner (10) abdeckt, und somit die 3D-Position mehrerer Schweißbrenner (10) über darin integrierte oder diesen zugeordnete Sensoren (36-38) ermittelbar sind.

25. Schweißsystem nach einem der Ansprüche 21 bis 24, **dadurch gekennzeichnet, dass** jedem Schweißprozessbereich (27) ein Referenzpunkt (62) im dreidimensionalen Raum zugeordnet ist.

26. Schweißsystem nach einem der Ansprüche 21 bis 25, **dadurch gekennzeichnet, dass** der Sensor (36) durch einen magnetoresistiven Sensor (36) gebildet ist.

27. Schweißsystem nach einem der Ansprüche 21 bis 26, **dadurch gekennzeichnet, dass** eine Einrichtung (39) zur Filterung von Störmagnetfeldern, welche insbesondere von der Stromquelle (2) des Schweißgerätes (1) und einem Lichtbogen (15) erzeugt werden, vorgesehen ist.

28. Schweißsystem nach einem der Ansprüche 21 bis 27, **dadurch gekennzeichnet, dass** eine Anzeigeeinrichtung zur akustischen und/oder optischen Anzeige der ermittelten 3D-Position oder von Abweichungen von Referenzpositionen zur Unterstützung durchzuführender Korrekturmaßnahmen vorgesehen ist.

29. Schweißsystem nach Anspruch 28, **dadurch gekennzeichnet, dass** die Anzeigeeinrichtung in einer Arbeitskleidung des Schweißers, insbesondere im Schweißhelm, integriert ist.

30. Schweißsystem nach einem der Ansprüche 21 bis 29, **dadurch gekennzeichnet, dass** zumindest ein Sensor (36) in einer Arbeitskleidung des Schweißers, insbesondere in einem Armband oder Handschuh, angeordnet ist.

31. Schweißsystem, mit einem Schweißgerät (1) und einem über ein Schlauchpaket (23) anschließbaren Schweißbrenner (10), wobei eine Vorrichtung zur Bestimmung der Position des Schweißbrenners (10) vorgesehen ist, wobei zur Bestimmung der Position des Schweißbrenners (10) zumindest ein Sender (33) im Schweißbrenner (10) integriert oder diesem zugeordnet ist, und dass zumindest ein Sensor (36) im dreidimensionalen Raum angeordnet ist, welcher Sensor (36) mit einer Auswerteeinheit (40) verbunden ist, so dass die Werte der 3D-Position des Schweißbrenners (10) über die vom Sensor (36) erfassten Messdaten ermittelbar sind, **dadurch gekennzeichnet, dass** im Schweißbrenner (10) ein Speicher (48) zum Speichern der ermittelten Werte für die 3D-Position des Schweißbrenners (10) sowie der dazugehörigen Schweißparameter für einen mit dem Schweißbrenner (10) ausgeführten Schweißprozess vorgesehen ist.

## Claims

1. A welding method using a welding torch (10) whose position is determined, whereina signal (34) is emitted by a transmitter (33), which is received by at least one sensor (36) integrated in, or associated with, the welding torch (10), and the received measurement data are sent to an evaluation unit (40) and the evaluation unit (40) determines values for the position of the welding torch (10) in the three-dimensional space, **characterized in that** in addition to the 3D position values, the associated welding parameters are stored for the welding process performed with the welding torch (10) and used as reference values for subsequent similar welding processes.

2. A welding method according to claim 1, **characterized in that** the received measurement data and/or the determined values for the 3D position of the welding torch (10) are stored.

3. A welding method according to claim 1 or 2, **characterized in that** the values for the 3D position of the welding torch (10) are determined at any settable times, in particular at the beginning and at the end of a welding process performed with the welding torch (10).

4. A welding method according to any one of claims 1 to 3, **characterized in that**, in addition to the 3D position values, the associated.times of a welding process performed with the welding torch (10) are stored.

5. A welding method according to claim 4, **characterized in that** times associated with the 3D position values are used as reference values for subsequent welding processes of the same kind.

6. A welding method according to any one of claims 1 to 5, **characterized in that** the values determined for the 3D positions, optionally along with the associated welding parameters and times, are compared with deposited reference values and, if required, the welding parameters are corrected and the effected changes are stored.

7. A welding method according to any one of claims 1 to 6, **characterized in that** the data relevant to the weld quality, in particular the welding speed, the sequence of welds (32) and the work angle (69) of the welding torch (10), are acquired and stored during the welding process.

8. A welding method according to any one of claims 1 to 7, **characterized in that** the values stored for the 3D positions of the welding torch (10) of at least one performed welding process, optionally reference values and stored changes, are read out for analysis.

9. A welding method according to any one of claims 1 to 8, **characterized in that** the welding parameters of a welding process are automatically adjusted on the basis of the determined 3D position values.

10. A welding method according to any one of claims 1 to 9, **characterized in that** the values determined for the 3D position of the welding torch (10) are compared to reference values and acoustically or optically indicated to the operator of the welding torch (10).

11. A welding method according to any one of claims 1 to 10, **characterized in that**, from the determined 3D position values as a function of time, the welding speed is ascertained and compared to welding speed default values and acoustically or optically indicated to the operator of the welding torch (10).

12. A welding method according to any one of claims 1 to 11, **characterized in that** the start of a welding process is only allowed on default 3D positions of the welding torch (10).

13. A welding method according to any one of claims 1 to 12, **characterized in that** the reference value for a 3D position of the welding torch (10) of the start position (53) of a weld (32) is adapted to the preferred welding direction of the operator of the welding torch (10).

14. A welding method according to any one of claims 1 to 13, **characterized in that** the 3D position of the welding torch (10) is determined with the welding apparatus (1) deactivated.

15. A welding method according to any one of claims 1 to 14, **characterized in that** the measurement data of at least one sensor (43) integrated in the work gear, in particular a wristband or glove, of the operator of the welding torch (10) are preferably sent to the evaluation unit (40).

16. A welding method according to any one of claims 1 to 15, **characterized in that** reference values, for instance for the start position (53) of the weld (32), and the welding parameters are stored in a memory (48) provided in the welding torch (10).

17. A welding method according to any one of claims 5 to 16, **characterized in that**, besides the reference values, identifiers for identifying the reference values for workpieces (16) of the same kind are stored.

18. A welding method according to any one of claims 1 to 17, **characterized in that** the time during the welding process performed with the welding torch (10) is detected.

19. A welding method according to claim 18, **characterized in that** the 3D position values determined during a welding process and the associated times are sent to the control device (4) of the welding apparatus (1) to calculate the welding speed of the welding process.

20. A welding method according to any one of claims 1 to 19, **characterized in that** the distance between the transmitter (33) and a reference point in the three-dimensional space is adjusted.

21. A welding system including a welding apparatus (1) and a welding torch (10) capable of being connected via a hose pack (23), wherein a device for determining the position of the welding torch (10) is provided, wherein for the determination of the position of the welding torch (10) in a three-dimensional space, at least one transmitter (33) and at least one sensor (36) are arranged in, or associated with, the welding torch (10), which sensor (36) is connected with an evaluation unit (40) to enable the determination of the values of the 3D position of the welding torch (10) via the measurement data acquired by the sensor (36), **characterized in that** a memory (48) is provided in the welding torch (10) for storing the detected values relating to the 3D position of the welding torch (10) as well as for storing the associated welding parameters for a welding process done with the welding torch (10).

22. A welding system according to claim 21, **characterized in that** the transmitter (33) is formed by a coil, a radio station, a radar station or movable transmitters (33) like satellites, in particular according to the GPS system.

23. A welding system according to claim 21 or 22, **characterized in that** the transmitter (33) of the position detection device comprises at least one coil for generating a magnetic field in the area (27) of the welding process of the welding torch (10), and that at least one sensor (36) for detecting the magnetic field generated by the coil is arranged in, or associated with, the welding torch (10).

24. A welding system according to any one of claims 21 to 23, **characterized in that** the transmitter (33) covers several welding process areas (27) and, hence, several welding torches (10) so as to enable the determination of the 3D positions of several welding torches (10) via sensors (36-38) integrated therein or associated therewith.

25. A welding system according to any one of claims 21 to 24, **characterized in that** each welding process area (27) is assigned its own reference point (62) in the three-dimensional space.

26. A welding system according to any one of claims 21 to 25, **characterized in that** the sensor (36) is formed by a magnetoresistive sensor (36).

27. A welding system according to any one of claims 21 to 26, **characterized in that** a device (39) for filtering interfering magnetic fields generated, in particular, by the power source (2) of the welding apparatus (1) and an electric arc (15) is provided.

28. A welding system according to any one of claims 21 to 27, **characterized in that** a display device for the acoustic and/or optical display of the determined 3D position, or of deviations from reference positions, is provided to promote corrective measures to be implemented.

29. A welding system according to claim 28, **characterized in that** the display device is integrated in the welder's work gear and, in particular, the welding helmet.

30. A welding system according to any one of claims 21 to 29, **characterized in that** at least one sensor (36) is provided in a welder's work gear and, in particular, a wristband or a glove.

31. A welding system including a welding apparatus (1) and a welding torch (10) capable of being connected via a hose pack (23), wherein a device for determining the position of the welding torch (10) is provided,wherein for the determination of the position of the welding torch (10), at least one transmitter (33) is integrated in, or associated with, the welding torch (10), and that at least one sensor (36) is arranged in the three-dimensional space, which sensor (36) is connected with an evaluation unit (40) to enable the determination of the values of the 3D position of the welding torch (10) via the measurement data acquired by the sensor (36), **characterized in that** a memory (48) is provided in the welding torch (10) for storing the detected values relating to the 3D position of the welding torch (10) as well as for storing the associated welding parameters for a welding process done with the welding torch (10).

## Revendications

1. Procédé de soudage, utilisant un chalumeau (10), dont la position est déterminée, dans lequel un signal (34) est émis par un émetteur (33), lequel signal est reçu par au moins un capteur (36) intégré au chalumeau (10) ou affecté à celui-ci, et les données de mesure reçues sont transmises à une unité de traitement (40), et des valeurs portant sur la position du chalumeau (10) sont déterminées dans l'espace tridimensionnel par l'unité de traitement (40), **caractérisé en ce qu'**en plus des valeurs des positions en 3D, les paramètres de soudage correspondants pour le processus de soudage réalisé par le chalumeau (10) sont enregistrés et consultés comme valeurs de référence pour des processus de soudage semblables ultérieurs.

2. Procédé de soudage selon la revendication 1, **caractérisé en ce que** l'on enregistre les données de mesure reçues et/ou les valeurs déterminées de la position en 3D du chalumeau (10).

3. Procédé de soudage selon la revendication 1 ou 2, **caractérisé en ce que** les valeurs pour la position en 3D du chalumeau (10) sont déterminées à des moments quelconques définissables, en particulier au début et à la fin d'un processus de soudage réalisé par le chalumeau (10).

4. Procédé de soudage selon l'une quelconque des revendications 1 à 3, **caractérisé en ce qu'**en plus des valeurs des positions en 3D, on enregistre les temps correspondants d'un processus de soudage réalisé par le chalumeau (10).

5. Procédé de soudage selon la revendication 4, **caractérisé en ce que** l'on consulte comme valeurs de référence les temps correspondant aux valeurs des positions en 3D pour des processus de soudage semblables ultérieurs.

6. Procédé de soudage selon l'une quelconque des revendications 1 à 5, **caractérisé en ce que** les valeurs déterminées pour les positions en 3D, au mieux avec les paramètres de soudage et les temps correspondants, sont comparées aux valeurs de référence enregistrées et, éventuellement, les paramètres de soudage sont corrigés et les modifications effectuées sont enregistrées.

7. Procédé de soudage selon l'une quelconque des revendications 1 à 6, **caractérisé en ce que** les données pertinentes pour la qualité des cordons de soudure, en particulier la vitesse de soudage, la séquence des cordons de soudure (32) et l'angle d'incidence (69) du chalumeau (10) pendant le processus de soudage, sont saisies et enregistrées.

8. Procédé de soudage selon l'une quelconque des revendications 1 à 7, **caractérisé en ce que** les valeurs enregistrées pour les positions en 3D du chalumeau (10) d'au moins un processus de soudage réalisé, au mieux les valeurs de référence et les modifications enregistrées sont lues pour analyse.

9. Procédé de soudage selon l'une quelconque des revendications 1 à 8, **caractérisé en ce que** les paramètres de soudage d'un processus de soudage sont réglés automatiquement à l'aide des valeurs déterminées pour la position en 3D.

10. Procédé de soudage selon l'une quelconque des revendications 1 à 9, **caractérisé en ce que** les valeurs déterminées pour la position en 3D du chalumeau (10) sont comparées à des valeurs de référence et indiquées par voie acoustique ou optique à l'utilisateur du chalumeau (10).

11. Procédé de soudage selon l'une quelconque des revendications 1 à 10, **caractérisé en ce que** la vitesse de soudage est déterminée à partir des valeurs déterminées pour la position en 3D en fonction du temps, comparée à des valeurs prédéfinies pour la vitesse de soudage et indiquée par voie acoustique ou optique à l'utilisateur du chalumeau (10).

12. Procédé de soudage selon l'une quelconque des revendications 1 à 11, **caractérisé en ce que** le démarrage d'un processus de soudage n'est permis qu'en des positions en 3D prédéfinies du chalumeau (10).

13. Procédé de soudage selon l'une quelconque des revendications 1 à 12, **caractérisé en ce que** la valeur de référence pour une position en 3D du chalumeau (10) de la position de départ (53) d'un cordon de soudure (32) est adaptée à la direction de soudage préférée de l'utilisateur du chalumeau (10).

14. Procédé de soudage selon l'une quelconque des revendications 1 à 13, **caractérisé en ce que** la position en 3D du chalumeau (10) est déterminée lorsque l'appareil de soudage (1) est désactivé.

15. Procédé de soudage selon l'une quelconque des revendications 1 à 14, **caractérisé en ce que** les données de mesure d'au moins un capteur (43) intégré au vêtement de travail, en particulier à un bracelet ou à un gant de l'utilisateur du chalumeau (10), sont transmises de préférence à l'unité de traitement (40).

16. Procédé de soudage selon l'une quelconque des revendications 1 à 15, **caractérisé en ce que** des valeurs de référence, notamment pour la position de départ (53) du cordon de soudure (32) et les paramètres de soudage sont enregistrées dans une mémoire (48) du chalumeau (10).

17. Procédé de soudage selon l'une quelconque des revendications 5 à 16, **caractérisé en ce que**, pour les valeurs de référence, un identifiant est enregistré pour marquer les valeurs de référence pour des pièces similaires (16).

18. Procédé de soudage selon l'une quelconque des revendications 1 à 17, **caractérisé en ce que** l'on saisit le temps pendant le processus de soudage réalisé par le chalumeau (10).

19. Procédé de soudage selon la revendication 18, **caractérisé en ce que** les valeurs déterminées des positions en 3D pendant un processus de soudage et le temps correspondant pour calculer la vitesse de soudage du processus de soudage sont transmis au dispositif de commande (4) de l'appareil de soudage (1).

20. Procédé de soudage selon l'une quelconque des revendications 1 à 19, **caractérisé en ce que** l'on ajuste la distance entre l'émetteur (33) et un point de référence dans l'espace tridimensionnel.

21. Système de soudage, comprenant un appareil de soudage (1) et un chalumeau (10) raccordable via un paquet de tuyaux (23), dans lequel il est prévu un dispositif pour déterminer la position du chalumeau (10), dans lequel, pour déterminer la position du chalumeau (10) dans l'espace tridimensionnel, un émetteur (33) et au moins un capteur (36) sont aménagés dans le chalumeau (10) ou affectés à celui-ci, lequel capteur (36) est raccordé à une unité de traitement (40) de sorte que les valeurs de la position en 3D du chalumeau (10) puissent être déterminées via les données de mesure saisies par le capteur (36), **caractérisé en ce qu'**il est prévu dans le chalumeau (10) une mémoire (48) pour enregistrer les valeurs déterminées pour la position en 3D du chalumeau (10), ainsi que les paramètres de soudage correspondants pour un processus de soudage réalisé avec le chalumeau (10).

22. Système de soudage selon la revendication 21, **caractérisé en ce que** l'émetteur (33) est formé par une bobine, une station radio, une station radar ou à partir d'émetteurs mobiles (33) comme des satellites, en particulier selon le système GPS.

23. Système de soudage selon la revendication 21 ou 22, **caractérisé en ce que** l'émetteur (33) du dispositif de saisie de position présente au moins une bobine pour générer un champ magnétique dans la zone (27) du processus de soudage du chalumeau (10) et **en ce qu'**au moins un capteur (36) pour saisir le champ magnétique généré par la bobine est aménagé dans le chalumeau (10) ou affecté à celui-ci.

24. Système de soudage selon l'une quelconque des revendications 21 à 23, **caractérisé en ce que** l'émetteur (33) couvre plusieurs zones de processus de soudage (27) et donc plusieurs chalumeaux (10) et la position en 3D de plusieurs chalumeaux (10) peut donc être déterminée par des capteurs (36 à 38) qui leur sont intégrés ou leur sont affectés.

25. Système de soudage selon l'une quelconque des revendications 21 à 24, **caractérisé en ce qu'**à chaque zone de processus de soudage (27) est affecté un point de référence (62) dans l'espace tridimensionnel.

26. Système de soudage selon l'une quelconque des revendications 21 à 25, **caractérisé en ce que** le capteur (36) est formé par un capteur magnétorésistif (36).

27. Système de soudage selon l'une quelconque des revendications 21 à 26, **caractérisé en ce qu'**il est prévu un dispositif (39) pour filtrer les champs magnétiques parasites, qui sont générés en particulier par la source de courant (2) de l'appareil de soudage (1) et par un arc électrique (15).

28. Système de soudage selon l'une quelconque des revendications 21 à 27, **caractérisé en ce qu'**il est prévu un dispositif d'affichage pour l'affichage acoustique et/ou optique de la position en 3D déterminée ou d'écarts de positions de référence pour favoriser des mesures de correction à effectuer.

29. Système de soudage selon la revendication 28, **caractérisé en ce que** le dispositif d'affichage est intégré à un vêtement de travail du soudeur, en particulier au casque de soudage.

30. Système de soudage selon l'une quelconque des revendications 21 à 29, **caractérisé en ce qu'**au moins un capteur (36) est aménagé dans un vêtement de travail du soudeur, en particulier dans un bracelet ou un gant.

31. Système de soudage, comprenant un appareil de soudage (1) et un chalumeau (10) raccordable via un paquet de tuyaux (23), dans lequel il est prévu un dispositif pour déterminer la position du chalumeau (10), dans lequel, pour déterminer la position du chalumeau (10), au moins un émetteur (33) est intégré au chalumeau (10) ou est affecté à celui-ci et au moins un capteur (36) est aménagé dans l'espace tridimensionnel, lequel capteur (36) est raccordé à une unité de traitement (40) de sorte que les valeurs de la position en 3D du chalumeau (10) puissent être déterminées via les données de mesure saisies par le capteur (36), **caractérisé en ce qu'**il est prévu dans le chalumeau (10) une mémoire (48) pour enregistrer les valeurs déterminées pour la position en 3D du chalumeau (10), ainsi que les paramètres de soudage correspondants pour un processus de soudage réalisé avec le chalumeau (10).
